(19) Europäisches Patentamt
European Patent Office
Office européen des brevets

(11) EP 4 428 199 A1

(12) **EUROPEAN PATENT APPLICATION**
published in accordance with Art. 153(4) EPC

(43) Date of publication:
**11.09.2024 Bulletin 2024/37**

(21) Application number: **22890022.1**

(22) Date of filing: **04.11.2022**

(51) International Patent Classification (IPC):
***C08L 101/00*** *(2006.01)* ***C08K 5/101*** *(2006.01)*
***C08L 83/04*** *(2006.01)* ***C08L 83/07*** *(2006.01)*
***C09K 5/06*** *(2006.01)* ***H01L 23/36*** *(2006.01)*

(52) Cooperative Patent Classification (CPC):
**C08K 5/101; C08L 83/04; C08L 101/00; C09K 5/06; H01L 23/36;** Y02E 60/10

(86) International application number:
**PCT/JP2022/041195**

(87) International publication number:
**WO 2023/080202 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 JP 2021181478**

(71) Applicant: **Sekisui Polymatech Co., Ltd.**
**Saitama-city, Saitama 338-0837 (JP)**

(72) Inventors:
- **KITADA, Gaku**
  **Saitama-city, Saitama 338-0837 (JP)**
- **KANEKO, Toshiki**
  **Saitama-city, Saitama 338-0837 (JP)**

(74) Representative: **Ter Meer Steinmeister & Partner**
**Patentanwälte mbB**
**Nymphenburger Straße 4**
**80335 München (DE)**

# (54) THERMALLY CONDUCTIVE COMPOSITION AND THERMALLY CONDUCTIVE MEMBER

(57) The thermally conductive composition of the present invention includes a liquid polymer, a thermally conductive filler and a structural viscosity imparting agent, wherein the thermally conductive composition has a viscosity ratio ($\eta 1/\eta 3$) between a viscosity $\eta 1$ measured by a rheometer under conditions of a measurement temperature of 25°C and a shear rate of 0.00252 (1/s) and a viscosity $\eta 3$ measured by a rheometer under conditions of a measurement temperature of 25°C and a shear rate of 0.05432 (1/s) of more than 10. The present invention can provide a thermally conductive composition in which sedimentation of the thermally conductive filler is suppressed in storage and which has excellent handling properties in use.

EP 4 428 199 A1

## Description

### Technical Field

The present invention relates to a thermally conductive composition and a thermally conductive member.

### Background Art

Cured products formed by filling a thermally conductive composition between a heating element and a heat sink and then curing the composition are used as a thermally conductive member that transfers the heat generated by the heating element to the heat sink. Thermally conductive compositions are flowable, and thus any gap between a heating element and a heat sink can be filled with the thermally conductive composition. Therefore, the thermally conductive member formed can reliably fill the gap between the heating element and the heat sink even if the gap is irregular, and thus is used as a thermally conductive spacer.

For example, as disclosed in Patent Literature 1, thermally conductive members are known to be used in a battery module as a spacer. A thermally conductive member is placed between a battery cell, which is a heating element, and a module housing, which is a heat sink, and serves to discharge the heat of the battery cell to the outside. The thermally conductive member is also placed between battery cells to secure them and keep them apart.

A thermally conductive composition including organopolysiloxane and a thermally conductive filler has been frequently used as a thermally conductive composition for forming a thermally conductive member. Generally, to improve heat dissipation, it is necessary to increase the content of the thermally conductive filler. However, if the content of the thermally conductive filler is increased, the viscosity of the thermally conductive composition increases, and this worsens handling properties. For example, if the viscosity of the thermally conductive composition increases, it may be difficult to dispense it from a dispenser or the like. Or, in the operation of compressing coating formed by putting a thermally conductive composition in the space between a heating element and a heat think, handling properties may be deteriorated and for example, load may be increased. For this reason, reducing the viscosity of thermally conductive compositions has been widely considered. Meanwhile, reduction in the viscosity of thermally conductive compositions may cause the problem of sedimentation of thermally conductive filler in long term storage.

To solve the above problem, Patent Literature 2 discloses that a silica filler is mixed in a thermally conductive silicone grease composition comprising liquid organopolysiloxane, organopolysiloxane specified by a specific formula and a thermally conductive filler.

### Citation List

#### Patent Literature

PTL 1: International Publication No. 2018/173860

PTL 2: JP 2012-7057 A

### Summary of Invention

#### Technical Problem

However, adding silica filler was not sufficient to suppress the sedimentation of thermally conductive filler while achieving excellent handling properties, and thus further improvement was required.

Accordingly, an object of the present invention is to provide a thermally conductive composition comprising a liquid polymer and a thermally conductive filler, in which sedimentation of the thermally conductive filler is suppressed in storage and which has excellent handling properties in use.

#### Technical Solution

The present inventors have conducted intensive studies and have found that the above problem can be solved by a thermally conductive composition comprising a liquid polymer, a thermally conductive filler and a structural viscosity imparting agent, which has a viscosity ratio above a certain level measured by a rheometer under specific conditions.

That is, the present invention provides the following [1] to [39].

[1] A thermally conductive composition comprising a liquid polymer, a thermally conductive filler and a structural viscosity imparting agent, the thermally conductive composition having a viscosity ratio ($\eta 1/\eta 3$) between a viscosity $\eta 1$ measured by a rheometer under conditions of a measurement temperature of 25°C and a shear rate of 0.00252 (1/s) and a viscosity $\eta 3$ measured by a rheometer under conditions of a measurement temperature of 25°C and a shear rate of 0.05432 (1/s) of more than 10.

[2] The thermally conductive composition according to [1] above, wherein the liquid polymer is organopolysiloxane.

[3] The thermally conductive composition according to [1] or [2] above, wherein the liquid polymer is an addition reaction-curable silicone.

[4] The thermally conductive composition according to [1] above, wherein the liquid polymer is alkenyl group-containing organopolysiloxane.

[5] The thermally conductive composition according to [1] above, wherein the liquid polymer is hydrogen organopolysiloxane.

[6] The thermally conductive composition according to any of [1] to [5] above, wherein the structural viscosity imparting agent is an ester compound that is solid at 25°C.

[7] The thermally conductive composition according to any of [1] to [6] above, wherein the structural viscosity imparting agent is an ester compound having a melting point of more than 25°C and 120°C or less.

[8] The thermally conductive composition according to any of [1] to [7] above, wherein a content of the structural viscosity imparting agent is 0.5 to 20 parts by mass based on 100 parts by mass of the liquid polymer.

[9] The thermally conductive composition according to any of [1] to [7] above, further comprising a compatibilizer.

[10] The thermally conductive composition according to [9] above, wherein the compatibilizer is an ester compound that is liquid at 25°C.

[11] The thermally conductive composition according to [10] above, wherein the ester compound that is liquid at 25°C is a monoester having 12 to 28 carbon atoms.

[12] The thermally conductive composition according to any of [9] to [11] above, wherein a content of the compatibilizer is 50 parts by mass or less based on 100 parts by mass of the liquid polymer.

[13] The thermally conductive composition according to any of [9] to [12] above, wherein the content of the compatibilizer is not less than twice and not more than 5 times the content of the structural viscosity imparting agent.

[14] The thermally conductive composition according to any of [9] to [13] above, wherein the content of the structural viscosity imparting agent is X part(s) by mass or more, which is represented by the following equation (1), based on 100 parts by mass of the liquid polymer:

$$X \text{ (part(s) by mass)} = 0.5 + w \times 0.2 \qquad \text{equation (1)}$$

wherein, w represents the content (part(s) by mass) of the compatibilizer based on 100 parts by mass of the liquid polymer.

[15] A two-part curable thermally conductive material comprising: a first part comprising the thermally conductive composition according to [4] above, and a second part comprising the thermally conductive composition according to [5] above.

[16] A supply form of a thermally conductive composition, comprising a container filled with the thermally conductive composition according to any of [1] to [14] above.

[17] A supply form of a two-part curable thermally conductive material, comprising: a first container filled with a first part comprising the thermally conductive composition according to [4] above, and a second container filled with a second part comprising the thermally conductive composition according to [5] above.

[18] A thermally conductive member, which is a cured product of the thermally conductive composition according to any of [1] to [14] above or the two-part curable thermally conductive material according to [15] above.

[19] A battery module comprising: a spacer comprising the thermally conductive member according to [18] above; a plurality of battery cells; and a module housing that houses the plurality of battery cells, wherein the spacer is arranged in the module housing.

[20] A method for producing a thermally conductive composition, the method comprising performing: a step of preparing a mixture comprising a liquid polymer, a thermally conductive filler and a structural viscosity imparting agent; a step of heating the mixture; and a step of cooling the mixture to adjust a viscosity ratio ($\eta 1/\eta 3$) between a viscosity $\eta$ 1 of the mixture measured by a rheometer under conditions of a measurement temperature of 25°C and a shear rate of 0.00252 (1/s) and a viscosity $\eta 3$ of the mixture measured by a rheometer under conditions of a measurement temperature of 25°C and a shear rate of 0.05432 (1/s) to more than 10.

[21] A method for producing a supply form of a thermally conductive composition, the method comprising performing:

a step of preparing a mixture comprising a liquid polymer, a thermally conductive filler and a structural viscosity imparting agent; a step of filling a container with the mixture; a step of heating the mixture; and a step of cooling the mixture to adjust a viscosity ratio ($\eta$ 1/$\eta$3) between a viscosity $\eta$ 1 of the mixture measured by a rheometer under conditions of a measurement temperature of 25°C and a shear rate of 0.00252 (1/s) and a viscosity $\eta$3 of the mixture measured by a rheometer under conditions of a measurement temperature of 25°C and a shear rate of 0.05432 (1/s) to more than 10.

[22] The method for producing a supply form of a thermally conductive composition according to [21] above, the method comprising performing: after filling a container with the mixture, a step of heating the mixture; and a step of cooling the mixture to adjust the viscosity ratio ($\eta$1/$\eta$3) between a viscosity $\eta$ 1 of the mixture measured by a rheometer under conditions of a measurement temperature of 25°C and a shear rate of 0.00252 (1/s) and a viscosity $\eta$3 of the mixture measured by a rheometer under conditions of a measurement temperature of 25°C and a shear rate of 0.05432 (1/s) to more than 10.

[23] The method for producing a supply form of a thermally conductive composition according to [21] above, wherein a container is filled with the mixture and then the mixture is heated.

[24] A supply form of a thermally conductive composition, comprising a container filled with a thermally conductive composition comprising a liquid polymer, a thermally conductive filler and a structural viscosity imparting agent and having a viscosity ratio ($\eta$1/$\eta$3) between a viscosity $\eta$1 measured by a rheometer under conditions of a measurement temperature of 25°C and a shear rate of 0.00252 (1/s) and a viscosity $\eta$3 measured by a rheometer under conditions of a measurement temperature of 25°C and a shear rate of 0.05432 (1/s) of more than 10.

[25] The supply form of a thermally conductive composition according to [24] above, wherein the liquid polymer is organopolysiloxane.

[26] The supply form of a thermally conductive composition according to [24] or [25] above, wherein the liquid polymer is an addition reaction-curable silicone.

[27] The supply form of a thermally conductive composition according to [24] above, wherein the liquid polymer is alkenyl group-containing organopolysiloxane.

[28] The supply form of a thermally conductive composition according to [24] above, wherein the liquid polymer is hydrogen organopolysiloxane.

[29] The supply form of a thermally conductive composition according to any of [24] to [28] above, wherein the structural viscosity imparting agent is an ester compound that is solid at 25°C.

[30] The supply form of a thermally conductive composition according to any of [24] to [29] above, wherein the structural viscosity imparting agent is an ester compound having a melting point of more than 25°C and 120°C or less.

[31] The supply form of a thermally conductive composition according to any of [24] to [30] above, wherein a content of the structural viscosity imparting agent is 0.5 to 20 parts by mass based on 100 parts by mass of the liquid polymer.

[32] The supply form of a thermally conductive composition according to any of [24] to [31] above, further comprising a compatibilizer.

[33] The supply form of a thermally conductive composition according to [32] above, wherein the compatibilizer is an ester compound that is liquid at 25°C.

[34] The supply form of a thermally conductive composition according to [33] above, wherein the ester compound that is liquid at 25°C is a monoester having 12 to 28 carbon atoms.

[35] The supply form of a thermally conductive composition according to any of [32] to [34] above, wherein a content of the compatibilizer is 50 parts by mass or less based on 100 parts by mass of the liquid polymer.

[36] The supply form of a thermally conductive composition according to any of [32] to [35] above, wherein the content of the compatibilizer is not less than twice and not more than 5 times the content of the structural viscosity imparting agent.

[37] The supply form of a thermally conductive composition according to any of [32] to [36] above, wherein the content of the structural viscosity imparting agent is X part(s) by mass or more, which is represented by the following equation (1), based on 100 parts by mass of the liquid polymer:

$$X\ (\text{part(s) by mass}) = 0.5 + w \times 0.2 \qquad \text{equation (1)}$$

wherein w represents the content (part(s) by mass) of the compatibilizer based on 100 parts by mass of the liquid polymer.

[38] A thermally conductive member, which is a cured product of a thermally conductive composition discharged from the supply form of a thermally conductive composition according to any of [24] to [37] above.

[39] A battery module comprising: a spacer comprising the thermally conductive member according to [38] above; a plurality of battery cells; and a module housing that houses the plurality of battery cells, wherein the spacer is arranged in the module housing.

Advantageous Effects of Invention

The present invention can provide a thermally conductive composition which can suppress sedimentation of thermally conductive filler in storage and which has excellent handling properties in use.

Brief Description of Drawings

[Fig. 1] Fig. 1 is a perspective view illustrating a typical structure of a battery module.
[Fig. 2] Fig. 2 is a perspective view illustrating a typical structure of a battery cell in a battery module.

Description of Embodiments

[Thermally conductive composition]

In the following, the thermally conductive composition of the present invention will be described in detail.
The thermally conductive composition of the present invention comprises a liquid polymer, a thermally conductive filler and a structural viscosity imparting agent, and has a viscosity ratio (η1/η3) between a viscosity η1 measured by a rheometer under conditions of a measurement temperature of 25°C and a shear rate of 0.00252 (1/s) and a viscosity η3 measured by a rheometer under conditions of a measurement temperature of 25°C and a shear rate of 0.05432 (1/s) of more than 10.

<Viscosity ratio>

The thermally conductive composition of the present invention has a viscosity ratio (η1/η3) measured by a rheometer of more than 10. When the viscosity ratio (η1/η3) is 10 or less, the thermally conductive filler is likely to settle down when the thermally conductive composition is stored, and handling properties tend to be deteriorated when used.
To suppress sedimentation of the thermally conductive filler in storage and improve handling properties in use, the thermally conductive composition has a viscosity ratio (η1/η3) measured by a rheometer of preferably 15 or more, and preferably 20 or more. The upper limit of the viscosity ratio (η1/η3) is not particularly limited, and for example 100.
Furthermore, the thermally conductive composition has a viscosity ratio (η1/η3) of preferably more than 10 and 100 or less, more preferably 15 to 100, and even more preferably 20 to 100.
While details of how to adjust the viscosity ratio (η1/η3) will be described later, when the thermally conductive composition includes a structural viscosity imparting agent, and heated and cooled, a loose bond (inner structure) is formed due to cohesive force as described later, and thus the viscosity ratio (η1/η3) measured by a rheometer becomes more than 10.
In the present description, the range written with "to" means a range from equal to or more than the predetermined numerical value before the "to" to equal to or less than the predetermined numerical value after the "to".
Although the reason why adjusting the viscosity ratio (η1/η3) as described above leads to suppression of the sedimentation of the thermally conductive filler when a thermally conductive composition is stored and improves its handling properties when used is not clear, the reason is assumed to be as follows.
Both viscosity η1 and viscosity η3 represent a viscosity in the low shear rate region. When a thermally conductive composition has a viscosity ratio (η1/η3) of more than 10, its viscosity changes significantly relative to the change in the shear rate in the low shear rate region. In other words, the slope in a graph illustrating the relation between the shear rate (the horizontal axis) and the viscosity (the vertical axis) increases. This means that in storage, i.e., when the shear rate is very small, the thermally conductive composition has high viscosity, and thus the sedimentation of the thermally conductive filler is suppressed. When the thermally conductive composition is used after storage, the shear rate is relatively increased, because, for example, the thermally conductive composition is discharged from a dispenser or coating is compressed. At that stage, the viscosity of the thermally conductive composition is effectively reduced as the shear rate is increased, and thus handling properties are improved.
In the present invention, it is important to adjust the viscosity ratio (η1/η3) as described above, and thus individual values of viscosity η 1 and viscosity η3 are not particularly limited. However, to suppress sedimentation of the thermally conductive filler, the thermally conductive composition has a viscosity η1 of, for example, 3,000 (Pa · s) or more, preferably 5,000 (Pa · s) or more, more preferably 10,000 (Pa · s) or more, even more preferably 20,000 (Pa · s) or more. The upper limit of viscosity η 1 is not particularly limited, and for example is 100,000 (Pa · s).
The thermally conductive filler has a viscosity η1 of, for example, preferably 3,000 (Pa · s) to 100,000 (Pa · s), more preferably 5,000 to 100,000 (Pa · s), even more preferably 10,000 to 100,000 (Pa · s), and particularly preferably

20,000 to 100,000 (Pa · s).

Furthermore, when the viscosity measured by a rheometer under conditions of a measurement temperature of 25°C and a shear rate of 2.52 (1/s) is defined as viscosity η2, the viscosity ratio (η1/η2) is preferably 50 or more, more preferably 80 or more, and even more preferably 100 or more from the viewpoint of the improvement in handling properties.

The thermally conductive composition has a viscosity η2 of preferably 350 (Pa · s) or less, more preferably 250 (Pa · s) or less and even more preferably 150 (Pa · s) or less from the viewpoint of the improvement in handling properties. The lower limit of viscosity η2 is not limited, and for example, is 50.

Viscosity η1, viscosity η2 and viscosity η3 of the thermally conductive composition are measured by a rheometer at 25°C. When viscosity is measured by a rheometer, the thermally conductive composition is heated and then cooled to room temperature (25°C) and then the viscosity is measured, in order to assess the viscosity while eliminating impact of shear when the sample is set on the measurement tool. At that stage the heating temperature is the melting point or more of the structural viscosity imparting agent, and is preferably the melting point +50°C or less. The heating temperature may be set in the range of 35 to 170°C. Details of measurement conditions of the rheometer will be described in Examples.

Viscosity η1, viscosity η2 and viscosity η3, the viscosity ratio (η1/η3) and the viscosity ratio (η1/η2) may be adjusted based on the type, the amount and the like of the structural viscosity imparting agent and the thermally conductive filler described later.

<Liquid polymer>

The thermally conductive composition of the present invention comprises a liquid polymer. The liquid polymer is liquid at room temperature (25°C), and examples thereof include silicone rubber and polyurethane resin, which are a raw material for preparing polymer matrix.

The liquid polymer may be a non-reactive compound having no reactive group or a reactive compound having a reactive group. Examples of reactive groups include an alkenyl group, a hydrosilyl group, a hydroxyl group and an isocyanate group.

Examples of liquid polymers include organopolysiloxane, polyol and polyisocyanate. The liquid polymer may include one component or may be a mixture of two or more components. In particular, organopolysiloxane is preferred as the liquid polymer. Use of organopolysiloxane as the liquid polymer makes it easier to increase the filling ratio of the thermally conductive filler and improve the thermal conductivity of the thermal conductive member formed from the thermally conductive composition.

Organopolysiloxane having a reactive group and organopolysiloxane having no reactive group, for example, may be used as organopolysiloxane. Organopolysiloxane having a reactive group is preferred.

Organopolysiloxane having a reactive group refers to organopolysiloxane having a reactive group capable of forming a cross-linked structure. Examples thereof include addition reaction-curable silicone, radical reaction-curable silicone, condensation reaction-curable silicone, ultraviolet light- or electron beam-curable silicone and moisture-curable silicone. Of them, addition reaction-curable silicone is preferred as the organopolysiloxane having a reactive group. In short, it is preferable that the liquid polymer according to the present invention is addition reaction-curable silicone.

Examples of addition reaction-curable silicones include those containing an alkenyl group-containing organopolysiloxane (base agent) and hydrogen organopolysiloxane (curing agent).

The liquid polymer according to the present invention may be those containing either of the base agent or the curing agent constituting the addition reaction-curable silicone. More specifically, the liquid polymer included in the thermally conductive composition may be alkenyl group-containing organopolysiloxane, hydrogen organopolysiloxane, or may include both alkenyl group containing organopolysiloxane and hydrogen organopolysiloxane.

It is also preferable to use the thermally conductive composition of the present invention to form a two-part curable thermally conductive material.

For example, a two-part curable thermally conductive material may comprise a first part comprising a thermally conductive composition comprising alkenyl group-containing organopolysiloxane, a thermally conductive filler and a structural viscosity imparting agent and having a viscosity ratio (η1/η3) of more than 10 and a second part comprising a thermally conductive composition comprising hydrogen organopolysiloxane, a thermally conductive filler and a structural viscosity imparting agent and having a viscosity ratio (η1/η3) of more than 10. The first part and the second part are mixed and reacted upon use to form a thermally conductive member including a polymer matrix made of silicone rubber.

In the two-part curable thermally conductive material, the thermally conductive filler is less likely to be settled down in storage in both the first part and the second part, and handling properties are improved upon use in both the first part and the second part.

The liquid polymer used in the above two-part curable thermally conductive material may be different from the addition reaction-curable organopolysiloxane. A liquid polymer that reacts when the first part and the second part are mixed may be included in the first part and the second part, respectively. For example, polyol may be used instead of

the alkenyl group-containing organopolysiloxane contained in the first part described above, and polyisocyanate may be used instead of the hydrogen organopolysiloxane contained in the second part described above. In that case, by mixing the first part and the second part and allowing them to react, a thermally conductive member containing polymer matrix formed of polyurethane resin is formed.

<Structural viscosity imparting agent>

The thermally conductive composition of the present invention comprises a structural viscosity imparting agent. The structural viscosity imparting agent is a compound that is solid at room temperature (25°C), and by mixing this to the liquid polymer and leaving the mixture under specific conditions, viscosity can be increased. More specifically, the structural viscosity imparting agent has a function of increasing the viscosity in the low shear rate region by heating and cooling a mixture prepared by mixing the structural viscosity imparting agent into liquid polymer, compared to the viscosity before heating. The structural viscosity imparting agent has a melting point of preferably more than 25°C, more preferably 30°C or more, and even more preferably 40°C or more. The structural viscosity imparting agent has a melting point of preferably 120°C or less, more preferably 80°C or less, even more preferably 75°C or less. The structural viscosity imparting agent has a melting point of preferably more than 25°C and 120°C or less, more preferably 30°C or more and 80°C or less, even more preferably 40°C or more and 75°C or less.

By mixing the liquid polymer and the structural viscosity imparting agent at room temperature and heating them to the melting point of the structural viscosity imparting agent or more and then cooling to room temperature, a loose bond (inner structure) is formed in the mixture of the liquid polymer and the structural viscosity imparting agent. The loose bond is formed due to the cohesive force in the structural viscosity imparting agent and is not broken by gravity. For this reason, sedimentation of the thermally conductive filler can be suppressed in storage. Then, upon use, a certain level of shear is applied to the mixture, and thus the above loose bond is broken, and the viscosity is reduced to improve workability including coating properties and compressibility.

In other words, the structural viscosity imparting agent forms the above inner structure due to the cohesive force, and this increases the viscosity in the low shear rate region. In this regard, the cohesive force means the action of mutual adherence and bonding of compounds with a similar structure. Furthermore, the loose bond is formed in the process of heating at the melting point or more and cooling. Moreover, the loose bond is broken by shear stress. Therefore, the loose bond is broken when shear stress is generated after cooling, and the bond can be formed again by heating and cooling.

To allow the above function to be effective, it is preferable that the structural viscosity imparting agent is not separated from the liquid polymer for a predetermined time when the structural viscosity imparting agent is heated to liquid. More specifically, it is preferable that the compound has such compatibility that does not cause phase separation into two phases in the compatibility test described later.

Inclusion of the structural viscosity imparting agent in the thermally conductive composition of the present invention makes it easier to adjust the viscosity to the above viscosity and the viscosity ratio to the above viscosity ratio.

A structural viscosity imparting agent having the above function may be used without limitation. Regarding specific examples of structural viscosity imparting agents, when the liquid polymer is organopolysiloxane, the structural viscosity imparting agent is preferably an ester compound that is solid at 25°C (hereinafter referred to as ester compound X) or an alcohol compound that is solid at 25°C.

The ester compound X has a melting point of preferably more than 25°C, more preferably 30°C or more, and even more preferably 40°C or more. The ester compound X has a melting point of preferably 120°C or less, more preferably 80°C or less, and even more preferably 75°C or less.

The ester compound X has a melting point of preferably more than 25°C and 120°C or less, more preferably 30°C or more and 80°C or less, and even more preferably 40°C or more and 75°C or less.

When the structural viscosity imparting agent is an ester compound X with the above melting point, the viscosity ratio ($\eta 1/\eta 3$) can be easily adjusted to the above desired range, and a thermally conductive composition which can suppress sedimentation of thermally conductive filler in storage and which has excellent handling properties in use can be easily obtained.

The ester compound X has an ester group. The ester compound X may be a monoester having an ester group or those having 2 or more ester groups, such as diester. Monoester and diester are preferred.

The number of carbon atoms of the ester compound X is not particularly limited as long as the ester compound X is solid at 25°C. The ester compound X has, for example, 20 or more, preferably 25 or more, more preferably 30 or more, and preferably 150 or less, more preferably 100 or less, and even more preferably 50 or less carbon atoms.

Furthermore, the ester compound X has, for example, preferably 20 to 150, more preferably 25 to 100 and even more preferably 30 to 50 carbon atoms.

It is preferable that the ester compound X is an ester of fatty acid and alcohol.

Fatty acid has preferably 2 to 30 carbon atoms, and more preferably 10 to 24 carbon atoms. The number of

carbon atoms of fatty acid means the total number of carbon atoms including carbonyl carbon in the carboxyl group.

Alcohol may have a hydroxyl group or two or more hydroxyl groups. Alcohol has preferably 2 to 30 carbon atoms, and more preferably 4 to 24 carbon atoms.

Cetyl myristate, pentaerythritol distearate, myristyl myristate, myristyl stearate, behenyl behenate, glycerol monostearate ester, ethylene glycol distearate ester and the like are preferred as the ester compound X. One ester compound X may be used alone or two or more of them may be used in combination.

When an alcohol compound that is solid at 25°C is used as the structural viscosity imparting agent, the alcohol compound has a melting point of preferably more than 25°C, more preferably 30°C or more, and even more preferably 40°C or more. The alcohol compound has a melting point of preferably 120°C or less, more preferably 80°C or less, and even more preferably 75°C or less.

The alcohol compound has a melting point of preferably more than 25°C and 120°C or less, more preferably 30°C or more and 80°C or less, and even more preferably 40°C or more and 75°C or less.

When the structural viscosity imparting agent is an alcohol compound with the above melting point, the viscosity ratio ($\eta 1/\eta 3$) can be easily adjusted to the above desired range, and a thermally conductive composition which can suppress sedimentation of thermally conductive filler in storage and which has excellent handling properties in use can be easily obtained.

The alcohol compound has a hydroxyl group. The alcohol compound may be a monoalcohol having a hydroxyl group or those having 2 or more hydroxyl groups, such as dialcohol. Monoalcohol is preferred.

The number of carbon atoms of the alcohol compound is not particularly limited as long as the alcohol compound is solid at 25°C. The alcohol compound has, for example, 14 or more, preferably 16 or more and more preferably 18 or more, and preferably 40 or less, more preferably 36 or less and even more preferably 30 or less carbon atoms.

Furthermore, the alcohol compound has, for example, preferably 14 to 40, more preferably 16 to 36, and even more preferably 18 to 30 carbon atoms.

Preferred as the alcohol compound is myristyl alcohol, cetanol, stearyl alcohol, nonadecyl alcohol, arachidyl alcohol, heneicosanol, behenyl alcohol, lignoceryl alcohol, ceryl alcohol, montanyl alcohol, myricyl alcohol, 1-dotriacontanol, or gedyl alcohol. One alcohol compound may be used alone or two or more of them may be used in combination.

Of the above ester compound X and the above alcohol compound, the ester compound X is preferred as the structural viscosity imparting agent because it has excellent storage stability.

The content of the structural viscosity imparting agent in the thermally conductive composition is preferably 0.5 part by mass or more, more preferably 3 parts by mass or more, and even more preferably 6 parts by mass or more, and preferably 25 parts by mass or less, and more preferably 20 parts by mass or less based on 100 parts by mass of the liquid polymer.

Furthermore, the content of the structural viscosity imparting agent in the thermally conductive composition is preferably 0.5 to 20 parts by mass, more preferably 3 to 20 parts by mass, and even more preferably 6 to 20 parts by mass based on 100 parts by mass of the liquid polymer.

It is preferable to adjust the content of the structural viscosity imparting agent in the thermally conductive composition based on the content of the compatibilizer described later. More specifically, it is preferable that the content of the structural viscosity imparting agent is X part(s) by mass or more, which is represented by the following equation (1), based on 100 parts by mass of the liquid polymer:

$$X \text{ (part(s) by mass)} = 0.5 + w \times 0.2 \qquad \text{equation (1)}$$

wherein, w represents the content (part(s) by mass) of the compatibilizer based on 100 parts by mass of the liquid polymer.

By adjusting the content of the structural viscosity imparting agent as described above, the viscosity ratio ($\eta 1/\eta 3$) of the thermally conductive composition can be easily adjusted to the above desired range, and a thermally conductive composition which can suppress sedimentation of thermally conductive filler in storage and which has excellent handling properties in use can be easily obtained.

<Compatibilizer>

It is preferable that the thermally conductive composition of the present invention comprises a compatibilizer. Inclusion of the compatibilizer reduces the viscosity (in particular viscosity $\eta 2$ at high shear rate) of the thermally conductive composition, improves coating properties and compressibility, and achieves excellent handling properties.

While the compatibilizer is not particularly limited as long as it is a compound compatible with liquid polymer at room temperature (25°C), it is preferable that the compatibilizer is an ester compound that is liquid at 25°C (hereinafter also referred to as an ester compound Y).

Unlike the method for reducing viscosity using a large amount of plasticizer such as dimethyl silicone oil, the

method for reducing the viscosity of the thermally conductive composition using the ester compound Y is capable of reducing the amount of low molecular weight siloxane formed by heating. Formation of low molecular weight siloxane may cause electrical malfunction. By contrast, although inclusion of the ester compound Y in the thermally conductive composition usually facilitates sedimentation of thermally conductive filler in storage, by adjusting the viscosity ratio ($\eta 1/\eta 3$) as in the present invention, sedimentation of thermally conductive filler can be suppressed even if the ester compound Y is included.

The ester compound Y may be a monoester having an ester group or those having 2 or more ester groups, such as diester. It is preferable that the ester compound Y is monoester in order to reduce the viscosity of the thermally conductive composition and maintain heat resistance.

The ester compound Y has preferably 12 to 28 carbon atoms. Monoester having 12 to 28 carbon atoms is particularly preferred. An ester compound having 12 or more carbon atoms allows the thermally conductive composition to have a certain level of heat resistance. Furthermore, an ester compound having 28 or less carbon atoms improves compatibility with the liquid polymer such as organopolysiloxane, and the viscosity of the thermally conductive composition is likely to be reduced. The ester compound has preferably 13 or more and more preferably 17 or more, and preferably 26 or less, more preferably 24 or less and even more preferably 22 or less carbon atoms to improve the heat resistance of the thermally conductive composition and to increase compatibility with the liquid polymer to reduce the viscosity of the thermally conductive composition.

The ester compound has preferably 13 to 26, more preferably 17 to 24, and even more preferably 17 to 22 carbon atoms.

It is preferable that the ester compound is an ester of fatty acid and alcohol, which is represented by the following formula (1), in order to reduce the viscosity and improve the heat resistance of the thermally conductive composition.

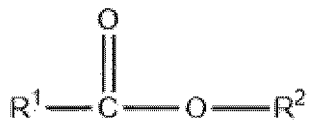

(1)

(in the formula (1), $R^1$ and $R^2$ are an alkyl group, and at least one of $R^1$ and $R^2$ is an alkyl group having 10 or more carbon atoms.)

In the formula (1), $R^1$ and $R^2$ are an alkyl group, and at least one of $R^1$ and $R^2$ is an alkyl group having 10 or more carbon atoms. The ester compound according to the present invention has 12 to 28 carbon atoms, and thus the total number of carbon atoms of $R^1$ and $R^2$ in the formula (1) is 11 to 27.

In the formula (1), $R^1$ and $R^2$ are each an alkyl group, and may be a linear alkyl group or a branched alkyl group.

At least one of $R^1$ and $R^2$ is an alkyl group having 10 or more carbon atoms. It is preferable that only one of $R^1$ and $R^2$ is an alkyl group having 10 or more carbon atoms. This reduces the impact of polarity of the ester group and allows the ester compound to be more compatible with the liquid polymer such as organopolysiloxane. Furthermore, it is preferable that both $R^1$ and $R^2$ are an alkyl group having 18 or less carbon atoms from the viewpoint of the improvement in the compatibility between the ester compound and the liquid polymer.

$R^1$ is preferably an alkyl group having 10 or more carbon atoms, and more preferably an alkyl group having 11 or more carbon atoms, and preferably an alkyl group having 15 or less carbon atoms.

$R^2$ is preferably an alkyl group having 2 or more carbon atoms, and more preferably an alkyl group having 3 or more carbon atoms, and preferably an alkyl group having 16 or less carbon atoms, more preferably an alkyl group having 12 or less carbon atoms, and even more preferably an alkyl group having 8 or less carbon atoms.

Furthermore, $R^1$ is preferably an alkyl group having 10 to 15 carbon atoms, and more preferably an alkyl group having 11 to 15 or more carbon atoms. $R^2$ is preferably an alkyl group having 2 to 16 carbon atoms, more preferably an alkyl group having 3 to 12 carbon atoms and even more preferably an alkyl group having 3 to 8 carbon atoms.

When $R^1$ and $R^2$ are an alkyl group with that number of carbon atoms, heat resistance of the thermally conductive composition can be easily improved while reducing the viscosity of the thermally conductive composition.

Octyl laurate, 1-methylheptyl laurate, isopropyl myristate, 1-methylheptyl myristate, isopropyl palmitate and the like are preferred as the ester compound Y, and 1-methylheptyl laurate is more preferred.

When the thermally conductive composition includes a compatibilizer, the content of the compatibilizer is preferably 80 parts by mass or less, more preferably 50 parts by mass or less, and even more preferably 40 parts by mass or less based on 100 parts by mass of the liquid polymer in order to suppress sedimentation of thermally conductive filler in storage; and the content is preferably 5 parts by mass or more and more preferably 10 parts by mass or more from the viewpoint of the improvement in handling properties.

The content of the compatibilizer is preferably 5 to 80 parts by mass, more preferably 10 to 50 parts by mass, and even more preferably 10 to 40 parts by mass based on 100 parts by mass of the liquid polymer.

The content of the compatibilizer is preferably not less than 1.5 times, more preferably not less than 1.8 times, and even more preferably not less than twice the content of the structural viscosity imparting agent, and the content of the compatibilizer is preferably not more than 20 times, more preferably not more than 12 times, and even more preferably not more than 5 times the content of the structural viscosity imparting agent.

The content of the compatibilizer is preferably not less than 1.5 times and not more than 20 times, more preferably not less than 1.8 times and not more than 12 times, and even more preferably not less than twice and not more than 5 times the content of the structural viscosity imparting agent in order to adjust the viscosity ratio ($\eta 1/\eta 3$) to a certain range and reduce viscosity $\eta 2$.

<Thermally conductive filler>

The thermally conductive composition of the present invention comprises a thermally conductive filler. Inclusion of the thermally conductive filler improves thermally conductivity of the thermally conductive composition and the thermally conductive member prepared from the thermally conductive composition.

Examples of thermally conductive fillers include metal, metal oxide, metal nitride, metal hydroxide, carbon materials, oxide, nitride and carbide of substances other than metal. Furthermore, examples of shapes of the thermally conductive filler include spherical powder and irregular shaped powder.

Examples of metal for the thermally conductive filler include aluminum, copper and nickel. Examples of metal oxides include aluminum oxide, which is typically alumina, magnesium oxide and zinc oxide. Examples of metal nitrides include aluminum nitride. Examples of metal hydroxides include aluminum hydroxide. Furthermore, examples of carbon materials include spherical graphite and diamond. Examples of oxides, nitrides and carbides of substances other than metal include quartz, boron nitride and silicon carbide. Of them, aluminum oxide and aluminum hydroxide are preferred as the thermally conductive filler, and it is preferable to use aluminum oxide and aluminum hydroxide in combination.

The thermally conductive filler has an average particle size of preferably 0.1 to 200 μm, more preferably 0.3 to 100 μm, and even more preferably 0.5 to 70 μm.

It is preferable to use a small particle thermally conductive filler having an average particle size of 0.1 μm or more and 5 μm or less and a large particle thermally conductive filler having an average particle size of more than 5 μm and 200 μm or less in combination. Use of the thermally conductive filler having a different average particle size increases the filling ratio.

The average particle size of the thermally conductive filler may be measured in observation, for example, by an electron microscope. More specifically, the particle size of any 50 particles of the thermally conductive filler is measured using, for example, an electron microscope or an optical microscope and the average value (arithmetic mean value) may be determined as the average particle size.

The content of the thermally conductive filler is preferably 150 to 3,000 parts by mass, more preferably 300 to 2,000 parts by mass, and even more preferably 600 to 1,600 parts by mass based on 100 parts by mass of the liquid polymer.

By setting the content of the thermally conductive filler to the above lower limit or more, a certain level of thermal conductivity may be imparted to the thermally conductive composition and the thermally conductive member. By setting the content of the thermally conductive filler to the above upper limit or less, the thermally conductive filler can be dispersed in a good manner. This also prevents unnecessary increase in the viscosity of the thermally conductive composition.

<Silicon compound>

The thermally conductive composition of the present invention may comprise at least one silicon compound selected from the group consisting of an alkoxysilane compound and an alkoxysiloxane compound. Inclusion of such a silicon compound allows the viscosity of the thermally conductive composition to be reduced.

Examples of alkoxy silane compounds include methyltrimethoxysilane, dimethyldimethoxysilane, diethyldimethoxysilane, trimethylmethoxysilane, methyltriethoxysilane, dimethyldiethoxysilane, ethyltrimethoxysilane, n-propyltrimethoxysilane, di-n-propyldimethoxysilane, di-n-propyldiethoxysilane, isobutyltrimethoxysilane, isobutyltriethoxysilane, isobutyltrimethoxysilane, isobutyltriethoxysilane, n-hexyltrimethoxysilane, n-hexyltriethoxysilane, methylcyclohexyldimethoxysilane, methylcyclohexyldiethoxysilane, n-octyltrimethoxysilane, n-octyltriethoxysilane, n-decyltrimethoxysilane and n-decyltriethoxysilane. Of them, n-decyltrimethoxysilane, dimethyldimethoxysilane and n-octyltriethoxysilane are preferred, and n-decyltrimethoxysilane is more preferred from the viewpoint of the reduction in the viscosity of the thermally conductive composition.

Examples of alkoxysiloxane compounds include methylmethoxysiloxane oligomer, methylphenylmethoxysiloxane oligomer, methylepoxymethoxysiloxane oligomer, methylmercaptomethoxysiloxane oligomer and methylacryloylmethoxysiloxane oligomer.

One or more silicon compounds may be used as the silicon compound.

When the silicon compound is used in the thermally conductive composition, the content of the silicon compound is preferably 0.1 part by mass or more and more preferably 0.5 part by mass or more, and preferably 5 parts by mass or less, more preferably 3 parts by mass or less, and even more preferably 2 parts by mass or less based on 100 parts by mass of the liquid polymer. When the silicon compound is used in the thermally conductive composition, the content of the silicon compound is preferably 0.1 to 5 parts by mass, more preferably 0.5 to 3 parts by mass, and even more preferably 0.5 to 2 parts by mass based on 100 parts by mass of the liquid polymer. When the content of the silicon compound is the lower limit or more, the viscosity of the thermally conductive composition is likely to be reduced. Meanwhile, when the content of the silicon compound is the upper limit or less, reduction in the heat resistance of the thermally conductive composition can be suppressed.

<Silicone oil>

The thermally conductive composition of the present invention may comprise a silicone oil from the viewpoint of the reduction in the viscosity. Examples of silicone oils include a straight silicone oil such as dimethyl silicone oil and methylphenyl silicone oil.

The content of the silicone oil is preferably 5 parts by mass or less, more preferably 2 parts by mass or less, and even more preferably 0 parts by mass based on 100 parts by mass of the liquid polymer because low molecular weight siloxane is likely to be formed when a large amount of low viscosity silicone oil is mixed. The low viscosity silicone oil refers to silicone oil having a viscosity at 25°C of 50 cs or less, silicone oil having a viscosity at 25°C of 30 cs or less and silicone oil having a viscosity at 25°C of 20 cs or less.

In particular, it is preferable that the thermally conductive composition does not include silicone oil having a viscosity at 25°C of 20 cs or less. This easily prevents the formation of low molecular weight siloxane. The viscosity of silicone oil is measured by using a rheometer MCR-302e made by Anton Paar setting the temperature of the sample to 25°C with a Peltier plate using a $\phi$ 50 mm 1° cone plate under conditions of a shear rate of 10 (1/sec).

Various additives may be included in the thermally conductive filler of the present invention. Examples of additives include a catalyst, a flame retardant, an antioxidant and a colorant.

(Method for producing thermally conductive composition)

The method for producing a thermally conductive composition of the present invention comprises a step of preparing a mixture comprising a liquid polymer, a thermally conductive filler and a structural viscosity imparting agent; a step of heating the mixture; and a step of cooling the mixture. The step of cooling the mixture is a step of cooling the mixture to adjust the viscosity ratio ($\eta 1/\eta 3$) between a viscosity $\eta 1$ of the mixture measured by a rheometer under conditions of a measurement temperature of 25°C and a shear rate of 0.00252 (1/s) and a viscosity $\eta 3$ of the mixture measured by a rheometer under conditions of a measurement temperature of 25°C and a shear rate of 0.05432 (1/s) to more than 10. In short, the method for producing a thermally conductive composition of the present invention comprises a step of preparing a mixture comprising a liquid polymer, a thermally conductive filler and a structural viscosity imparting agent; a step of heating the mixture; and a step of cooling the mixture in that order. The thermally conductive composition of the present invention in which the viscosity ratio ($\eta 1/\eta 3$) is adjusted as described above can be obtained through the above steps.

Furthermore, the method for producing a supply form of the thermally conductive composition described later may comprise a step of filling a container with a mixture, after the step of preparing a mixture comprising a liquid polymer, a thermally conductive filler and a structural viscosity imparting agent in the method for producing a thermally conductive composition described above. It is preferable that the step of heating the mixture and the step of cooling the mixture are performed after filling a container with the mixture.

A known mixing method may be suitably used in the step of preparing a mixture, and for example, materials may be mixed by a known kneader, kneading roll or mixer.

The heating temperature in the step of heating the mixture may be a temperature at which the structural viscosity imparting agent melts or more, and for example the heating temperature is the melting point of the structural viscosity imparting agent or more and the melting point +10°C to melting point +50°C. The upper limit of the heating temperature is not particularly limited, and for example is preferably 200°C or less from the viewpoint of the suppression of thermal degradation of the structural viscosity imparting agent. Furthermore, when the mixture includes a volatile component, it is preferable that the heating temperature is kept as low as possible, and for example, is preferably 100°C or less, and particularly preferably 80°C or less. The heating time is not particularly limited, and is set to a period of time in which the whole mixture is heated depending on the volume of the mixture. The heating time is for example, 5 to 1,000 minutes, and preferably 10 to 500 minutes. When the heating time is lower limit or more, even the inside of the mixture is sufficiently heated. When the heating time is the upper limit or less, and when the mixture includes a volatile substance, a part of

the volatile substance can be prevented from evaporating.

In the step of cooling the mixture, the mixture after heating is cooled to room temperature (25°C). The method of cooling is not particularly limited, and the mixture may be cooled by a cooler or may be naturally cooled.

By mixing a compatibilizer, the temperature at which the structural viscosity imparting agent melts can be reduced. Thus, when the heating temperature needs to be low, it is preferable to mix a compatibilizer.

(Two-part curable thermally conductive material)

In the present invention, it is preferable to form a two-part curable thermally conductive material using the thermally conductive composition from the viewpoint of storage stability and the like.

More specifically, a two-part curable thermally conductive material comprising a first part comprising a thermally conductive composition comprising alkenyl group-containing organopolysiloxane, a thermally conductive filler and a structural viscosity imparting agent and having a viscosity ratio ($\eta 1/\eta 3$) of more than 10 and a second part comprising a thermally conductive composition comprising hydrogen organopolysiloxane, a thermally conductive filler and a structural viscosity imparting agent and having a viscosity ratio ($\eta 1/\eta 3$) of more than 10 is preferred as described above.

The mass ratio between the first part and the second part (the second part! the first part) is preferably 1, or a value closed to 1. The mass ratio is specifically preferably 0.9 to 1.1 and more preferably 0.95 to 1.05. A mass ratio between the first part and the second part of 1 or a value close to 1 allows a mixture of the first part and the second part to be easily prepared.

It is preferable that the first part include a catalyst for the addition reaction and the second part does not. By doing so, the first part and the second part have excellent storage stability before mixing, facilitate reaction after mixing and rapidly cures, and physical properties of the thermally conductive member obtained by curing can be improved. Although the cause is not clear, it may be because the catalyst for addition reaction such as platinum catalyst is coordinated with the alkenyl group, which is the site of the addition reaction in the alkenyl group-containing organopolysiloxane, allowing curing to proceed.

Furthermore, it is preferable that the second part includes alkenyl group-containing organopolysiloxane. When the second part includes alkenyl group-containing organopolysiloxane in addition to hydrogen organopolysiloxane, which is a curing agent, it becomes easier to adjust the mass ratio and the viscosity ratio of the second part to the first part to 1 or a value close to 1. By contrast, it is preferable that the first part does not include hydrogen organopolysiloxane which is a curing agent.

It is preferable that the above first part and the second part are separately stored in a container such as a syringe, a cartridge, a pail can or a drum. More specifically, the two are stored in such a manner that the first part is put in the first syringe and the second part is put in the second syringe. In this case the first syringe and the second syringe may be arranged in a row to prepare a dual syringe. When a cartridge is used, the first part and the second part are stored preferably in such a manner that the first part is put in the first cartridge and the second part is put in the second cartridge. In this case as well the first cartridge and the second cartridge may be arranged in a row to prepare a dual cartridge. Furthermore, when a pail can or a drum is used, the first part and the second part are stored preferably in such a manner that the first part is put in the first pail can or the first drum, and the second part is put in the second pail can or the second drum.

As described above, the thermally conductive composition is prepared through a step of preparing a mixture, a step of heating the mixture, and a step of cooling the mixture. Thus, a mixture comprising, for example, alkenyl group-containing organopolysiloxane, a thermally conductive filler and a structural viscosity imparting agent is prepared, and the mixture is put in the first syringe, and through the heating step and the cooling step, the first syringe in which the first part is put is prepared. Likewise, a mixture comprising, for example, hydrogen organopolysiloxane, a thermally conductive filler and a structural viscosity imparting agent is prepared, and the mixture is put in the second syringe, and through the heating step and the cooling step, the second syringe in which the second part is put is prepared.

With the sedimentation of the thermally conductive filler suppressed, the first part put in the first syringe and the second part put in the second syringe are stored under excellent conditions. When in use, the first part and the second part are discharged from the first syringe and the second syringe, respectively, are mixed by a static mixer or the like, and cured to form a thermally conductive member. When the first part and the second part are discharged, a certain level of shear force is generated, resulting in reduced viscosity of the first part and the second part, and hence easy discharge. Furthermore, the coating formed after discharge has excellent workability as it can be easily compressed. This, for example, simplifies an operation of discharging a mixture of the first part and the second part into the space between a heating element and a heat sink to form a coating having a certain level of thickness and then stretching the coating into a thin member with a small load.

[Supply form]

The present invention also provides a supply form of a thermally conductive composition, comprising a container filled with the thermally conductive composition described above. The present invention also provides a supply form of a two-part curable thermally conductive material, comprising a first container filled with the above first part and a second container filled with the above second part. Examples of containers include a syringe, a cartridge, a pail can and a drum as described above. The supply form can suppress sedimentation of thermally conductive filler contained in the thermally conductive composition when the thermally conductive composition is stored in the container, and the supply form provides excellent workability when ejecting by, for example, discharging the thermally conductive composition from the supply form.

[Thermally conductive member]

The present invention can also provide a thermally conductive member comprising a polymer matrix, a thermally conductive filler and a structural viscosity imparting agent having a melting point of more than 25°C. The thermally conductive member is a cured product of the thermally conductive composition described above, or a cured product of the two-part curable thermally conductive material described above.

Examples of polymer matrix include silicone rubber and polyurethane resin, and in particular, silicone rubber is preferred.

The type of the thermally conductive filler is as described above.

It is preferable that the structural viscosity imparting agent is an ester compound X having a melting point of more than 25°C and 120°C or less. Details of the ester compound X are as described above. The amount of the thermally conductive filler relative to that of the polymer matrix is the same as the amount of the thermally conductive filler relative to the liquid polymer described above. The amount of the structural viscosity imparting agent relative to that of the polymer matrix is the same as the amount of the structural viscosity imparting agent relative to the liquid polymer described above.

The thermally conductive member is obtained from the thermally conductive composition or the two-part curable thermally conductive material described above. When the liquid polymer contained in the thermally conductive composition is a reactive compound having a reactive group, a thermally conductive member is obtained by curing the thermally conductive composition. When the two-part curable thermally conductive material is used, the first part and the second part are mixed as described above and cured to give a thermally conductive member.

For the thermally conductive member of the present invention, the thermally conductive composition, which is the raw material, can be handled well because the structural viscosity imparting agent is used, and thus workability when forming the thermally conductive member is excellent. Furthermore, sedimentation of thermally conductive filler in the thermally conductive composition, i.e., the raw material, is suppressed in storage, and the thermally conductive composition has uniform formulation. Thus, the formulation of the resulting thermally conductive member is also uniform, and variation in properties is small.

The thermally conductive member has a thermal conductivity of preferably 1.0 W/ m · K or more, more preferably 1.5 W/ m · K or more, and even more preferably 2.0 W/m · K or more. A thermal conductivity of the lower limit or more improves thermally conductive properties. Thus, when the thermally conductive member is used, for example, as a spacer for a battery cell module, heat generated in the battery cell can be effectively transferred to the module housing through the spacer, and this suppresses excess increase in the temperature of the battery cell. The higher the thermal conductivity of the thermally conductive member, the better, but the thermally conductive member has a thermal conductivity of, for example, practically 15 W/ m · K or less. The thermal conductivity is measured according to ASTM D5470.

[Battery module]

The application of the thermally conductive member of the present invention is not particularly limited, and the thermally conductive member may be used as a spacer in a battery module as described below.

The battery module of the present invention comprises a spacer comprising the thermally conductive member, a plurality of battery cells, and a module housing that houses the plurality of battery cells, and the spacer is arranged in the module housing.

The spacer made of the thermally conductive member is put between battery cells, and between the battery cell and the module housing, and the spacer put therein is closely attached to the battery cell and the module housing. Accordingly, the spacer between battery cells functions to keep the battery cells apart. Furthermore, the spacer between the battery cell and the module housing is closely attached to both the battery cell and the module housing, and functions to transfer heat generated in the battery cell to the module housing.

Fig. 1 illustrates a specific structure of the battery module. Fig. 2 illustrates a specific structure of the respective

battery cells. As shown in Fig. 1, a plurality of battery cells 11 are arranged in the battery module 10. The battery cells 11 are sealed in flexible outer film by lamination, and the overall shape is flat and thin for the height and the width. As shown in Fig. 2, the positive electrode 11a and the negative electrode 11b of the battery cell 11 are exposed, and the center part 11c of the flat surface is designed to be thicker than the pressure-bonded end portion 11d.

As shown in Fig. 1, the respective battery cells 11 are arranged so that their flat surfaces are faced with each other. In the structure of Fig. 1, the plurality of battery cells 11 that are housed in the module housing 12 are not entirely covered with the spacer 13 put therein. The spacer 13 is put in the module housing 12 so that part of the space in the module housing (the bottom part) is filled with the spacer 13. The spacer 13 is put between battery cells 11 and between the battery cell 11 and the module housing 12. In this part the spacer 13 is closely attached to the surface of the battery cell 11 and the inner surface of the module housing 12.

While the spacer 13 put between battery cells 11 is bonded to the surface of the battery cells 11, the spacer 13 itself is moderately elastic and soft, and even when an external force that changes the distance between battery cells 11 is applied thereto, the spacer 13 can alleviate distortion and deformation due to the external force. Thus, the spacer 13 functions to keep the battery cells 11 apart.

The spacer 13 put between the battery cell 11 and the module housing 12 is also closely bonded to the surface of the battery cell 11 and the inner surface of the module housing 12. As a result, the heat generated in the battery cell 11 is transferred to the inner surface of the module housing 12 closely bonded to one surface of the spacer 13 through the spacer 13 bonded to the surface of the battery cell 11.

The spacer 13 is formed in the battery module 10 by application of the thermally conductive composition or the two-part curable thermally conductive material which are in the form of liquid using a usual dispenser, and then curing the coating. For the two-part curable thermally conductive material, for example, the first syringe and the second syringe (or the first cartridge and the second cartridge) described above may be set on a dispenser, and the material is applied thereto by the dispenser.

The two-part curable thermally conductive material is easily stored, and if mixed immediately before use, the material is less likely to be cured in the operation of application using a dispenser, and can be rapidly cured after the application. Furthermore, application by the dispenser is preferred because the material can be put relatively deep into the housing 12 of the battery module 10.

For the spacer 13 which covers the battery cell 11, preferably 20 to 100%, and more preferably 20 to 40% of one surface of the respective battery cells 11 is covered with the spacer 13. When 20% or more of the surface is covered therewith, the battery cells 11 are held in a stable manner. Furthermore, sufficiently covering the battery cells which produce large amount of heat improves efficiency of heat dissipation. Meanwhile, when 100% or less of the surface is covered therewith, heat generated in the battery cells 11 can be efficiently released. Furthermore, covering 40% or less suppresses weight increase and the reduction in workability. It is also preferable to cover the side of the battery cell 11 where electrodes 11a and 11b are located with the spacer 13 in order to improve efficiency of heat dissipation. It is more preferable to cover the whole of the electrodes 11a and 11b with the spacer 13.

As described above, in the battery module 10, the heat generated in the battery cells 11 can be released to the module housing 12 through the spacer 13.

It is also preferable to use the spacer 13 in a battery pack having a plurality of battery modules 10 inside thereof. A battery pack generally has a plurality of battery modules 10 and a battery pack housing which stores the battery modules 10. In the battery pack, a spacer 13 can be put between the battery module 10 and the battery pack housing. This allows the heat released to the module housing 12 as described above to be further released to the battery pack housing, enabling effective heat dissipation.

Furthermore, since the thermally conductive member is used for the spacer 13, workability in forming the spacer 13 is high.

## Examples

Hereinafter the present invention will be described in detail with reference to Examples, but the present invention is not limited by these Examples.

### [Viscosity]

In Examples 1 to 33 and Comparative Examples 1 to 4, the viscosity of the first part and the second part, which were the thermally conductive composition, was measured as follows.

The viscosity of the first part and the second part, which were a sample, was measured at various shear rates by using a rheometer. Using Rheometer MCR-302e made by Anton Paar, the temperature of the sample was adjusted to 85°C, which is the melting point or more of the respective structural viscosity imparting agents, with a Peltier plate, and the sample was left for 5 minutes. Then the sample was cooled to 25°C and left for 10 minutes. Subsequently, the

viscosity was measured while continuously changing the shear rate using a ϕ 25 mm parallel plate. The viscosities, the viscosity ratio (η1/η3) and the viscosity ratio (η1/η2) were determined under conditions of a shear rate of 0.00252 (1/s), 0.0054 (1/s), 0.0117 (1/s), 0.0252 (1/s), 0.05432 (1/s), 0.117 (1/s), 0.252 (1/s), 0.543 (1/s), 1.17 (1/s), 2.52 (1/s), 5.43 (1/s) and 11.7 (1/s).

[Viscosity 2]

In Comparative Examples 5 to 9, the viscosity of the first part and the second part, which were the thermally conductive composition, was measured as follows. The viscosity of the first part and the second part, which were a sample, was measured at various shear rates by using a rheometer. Using Rheometer MCR-302e made by Anton Paar, the temperature of the sample was adjusted to 25°C with a Peltier plate and the sample was left for 10 minutes. Subsequently, the viscosity was measured while continuously changing the shear rate using a ϕ 25 mm parallel plate. The viscosities, the viscosity ratio (η1/η3) and the viscosity ratio (η1/η2) were determined under conditions of a shear rate of 0.00252 (1/s), 0.0054 (1/s), 0.0117 (1/s), 0.0252 (1/s), 0.05432 (1/s), 0.117 (1/s), 0.252 (1/s), 0.543 (1/s), 1.17 (1/s), 2.52 (1/s), 5.43 (1/s) and 11.7 (1/s).

[Evaluation of suppression of sedimentation]

For Examples 1 to 33, Comparative Examples 1 to 4, suppression of sedimentation was evaluated as follows.
Suppression of sedimentation in each of the first part and the second part was evaluated as described below.
10 cc of the respective samples was put in a 15 cc transparent container (having a cylindrical shape with a diameter of 24 mm) and heated at the melting point of the structural viscosity imparting agent +10°C for 30 minutes. Next, the sample was naturally cooled in an atmosphere of 25°C until the temperature of the sample reached 25°C, and left for 30 days, and then the condition of the sample was observed.

(Evaluation criteria)

5 No change in appearance
4 Small amount of liquid component exude at edge of surface
3 Small amount of liquid component exude at surface, but liquid component do not flow even when container tilted
2 Small amount of liquid component exude at surface, and liquid component flow when container tilted
1 Liquid component separated when viewed from side

[Evaluation of suppression of sedimentation 2]

For Comparative Examples 5 to 9, suppression of sedimentation was evaluated as follows.
Suppression of sedimentation in each of the first part and the second part was evaluated as described below.
10 cc of the respective samples was put in a 15 cc transparent container (having a cylindrical shape with a diameter of 24 mm). Next, the sample was left at 25°C for 30 days, and then the condition of the sample was observed.

(Evaluation criteria)

5 No change in appearance
4 Small amount of liquid component exude at edge of surface
3 Small amount of liquid component exude at surface, but liquid component do not flow even when container tilted
2 Small amount of liquid component exude at surface, and liquid component flow when container tilted
1 Liquid component separated when viewed from side

[Evaluation of compressibility (compressibility)]

For Examples 1 to 33 and Comparative Examples 1 to 4, compressibility was evaluated as follows.
16.4 cc of the raw material of the first part and the raw material of the second part shown in the Tables was put in the first syringe and the second syringe, which were a 25 cc dual syringe, respectively. Next, the first part and the second part were heated to the melting point of the structural viscosity imparting agent +10°C, and after leaving for 15

minutes, the sample was cooled to 25°C and left for 10 minutes.

Subsequently, 2.5 cc of the sample (a mixture of the first part and the second part, mass ratio 1:1) was discharged to an aluminum plate using a static mixer. The material discharged was compressed by a 40 mm ϕ plunger (a jig for compression test) at a compression rate of 60 mm/ minute, and the value of the load at which the gap between the jigs was compressed to 0.665 mm was read and determined as the compressive load. The temperature for the compression test was 25°C. Compressibility was evaluated based on the value of compressive load according to the following criteria.

(Evaluation criteria)

| | |
|---|---|
| 5 | Less than 100 N |
| 4 | 100 N or more and less than 175 |
| 3 | 175 N or more and less than 250 |
| 2 | 250 N or more and less than 350 |
| 1 | 350 N or more |

[Evaluation of compressibility 2 (compressibility 2)]

For Comparative Examples 5 to 9, compressibility was evaluated as follows.

16.4 cc of the raw material of the first part and the raw material of the second part shown in the Tables was put in the first syringe and the second syringe, which were a 25 cc dual syringe, respectively, and left at 25°C for 10 minutes.

Subsequently, 2.5 cc of the sample (a mixture of the first part and the second part, mass ratio 1:1) was discharged to an aluminum plate using a static mixer. The material discharged was compressed by a 40 mm ϕ plunger (a jig for compression test) at a compression rate of 60 mm/ minute, and the value of the load at which the gap between the jigs was compressed to 0.665 mm was read and determined as the compressive load. The temperature for the compression test was 25°C. Compressibility was evaluated based on the value of compressive load according to the following criteria.

(Evaluation criteria)

| | |
|---|---|
| 5 | Less than 100 N |
| 4 | 100 N or more and less than 175 |
| 3 | 175 N or more and less than 250 |
| 2 | 250 N or more and less than 350 |
| 1 | 350 N or more |

[Comprehensive evaluation]

The average value of the evaluation of suppression of sedimentation and the evaluation of compressibility in Examples and Comparative Examples was determined as comprehensive evaluation.

More specifically, the value of the comprehensive evaluation was calculated by the following equation.

Comprehensive evaluation = (evaluation of suppression of sedimentation of first part + evaluation of suppression of sedimentation of second part + evaluation of compressibility × 2)/4

[Compatibility test]

The compatibility of the respective structural viscosity imparting agents with organopolysiloxane, which is liquid polymer, was evaluated. More specifically, for Test 1, 10 g of silicone A agent and 2 g of the structural viscosity imparting agent used in Examples were put in a polypropylene container and left in a constant temperature bath at 80°C for 15 minutes. Then the mixture was stirred immediately (within 10 seconds) after being removed from the constant temperature bath, and while naturally cooling the mixture in an environment of 25°C, the condition 1 minute after being removed from

the constant temperature bath was observed.

Subsequently, Test 2 was performed in the same manner for 5 g of the silicone A agent, 4 g of the compatibilizer and 1 g of the structural viscosity imparting agent used in Examples.

A: Mixture was transparent both in Test 1 and Test 2.
B: Mixture was clouded white in Test 1 and transparent in Test 2.
C: Mixture was clouded white both in Test 1 and Test 2.
D: Mixture was separated into two phases both in Test 1 and Test 2.

In Examples and Comparative Examples, the following components were used.

<Liquid polymer>

- Silicone A agent including alkenyl group-containing organopolysiloxane and small amount of addition reaction catalyst (platinum catalyst), viscosity at 25°C: 400 cs.
- Silicone B agent including alkenyl group-containing organopolysiloxane and hydrogen organopolysiloxane, viscosity at 25°C 300 cs.

<Structural viscosity imparting agent (ester compound X solid at 25°C)>

For the measurement of the melting point of the ester compound X, 20 mg of the ester compound X was precisely weighed in an aluminum cell, and then the melting point was measured using DSC-60 made by Shimadzu Corporation under nitrogen flow at a temperature increase rate of 10°C/ minute from 25°C to 90°C.

- Cetyl myristate melting point 56°C, having 30 carbon atoms, result of compatibility test: B
- Pentaerythritol distearate melting point 55°C, having 41 carbon atoms, result of compatibility test: C
- Myristyl myristate melting point 46°C, having 28 carbon atoms, result of compatibility test: A
- Myristyl stearate melting point 57°C, having 32 carbon atoms, result of compatibility test: B
- Behenyl behenate melting point 75°C, having 44 carbon atoms, result of compatibility test: C
- Glycerol monostearate melting point 50°C, having 21 carbon atoms, result of compatibility test: C
- Ethylene glycol distearate melting point 60°C, having 38 carbon atoms, result of compatibility test: B

<Structural viscosity imparting agent (alcohol compound that is solid at 25°C and the like)>

The melting point of the compound was measured in the same manner as measuring that of the ester compound X.

- Behenyl alcohol melting point 67°C, having 22 carbon atoms, result of compatibility test: B
- Polyethylene glycol - polypropylene glycol - polyethylene glycol copolymer (PEG-PPG-PEG copolymer), melting point 56°C, result of compatibility test: D

<Thermally conductive filler>

- Aluminum oxide spherical, having average particle size of 12 μm
- Aluminum oxide, spherical, having average particle size of 45 μm
- Aluminum hydroxide, irregular shape, having average particle size of 1 μm
- Aluminum hydroxide, irregular shape, having average particle size of 10 μm
- Aluminum hydroxide, irregular shape, having average particle size of 90 μm

<Compatibilizer (ester compound Y liquid at 25°C)>

Ester compound Y 1-methylheptyl laurate, melting point -10°C or less

<Silicon compound>

n-decyltrimethoxysilane

<Thixotropy-imparting agent>

Fumed silica having average particle size of 10 nm

[Examples 1 to 33, Comparative Examples 1 to 9]

The first part and the second part were prepared based on the formulation shown in Tables 1 to 9, and viscosity was measured and suppression of sedimentation and compressibility were evaluated. The results are shown in Tables 1 to 9. As described above, in Comparative Examples 5 to 9, viscosities were evaluated as in "Viscosity 2," suppression of sedimentation was evaluated as in "Evaluation of suppression of sedimentation 2" and compressibility was evaluated as in "Evaluation of compressibility 2."

## Table 1

| | | | | Example 1 | | Example 2 | | Example 3 | | Example 4 | | Example 5 | |
|---|---|---|---|---|---|---|---|---|---|---|---|---|---|
| | | | | First part | Second part | First part | Second part | First part | Second part | First part | Second part | First part | Second part |
| Liquid polymer | | Silicone A agent | (Part(s) by mass) | 70 | | 70 | | 70 | | 70 | | 96 | |
| | | Silicone B agent | | | 70 | | 70 | | 70 | | 70 | | 96 |
| Silicon compound | | n-decyltrimethoxysilane | | 1.5 | 1.5 | 1.5 | 1.5 | 1.5 | 1.5 | 1.5 | 1.5 | 1 | 1 |
| Compatibilizer | | 1-methylheptyl laurate | | 23.5 | 23.5 | 21 | 21 | 25.5 | 25.5 | 23.5 | 23.5 | 0 | 0 |
| Structural viscosity imparting agent | | Cetyl myristate | | 5 | 5 | 7.5 | 7.5 | | | | | | |
| | | Pentaerythritol distearate | | | | | | 3 | 3 | 5 | 5 | | |
| | | Myristyl myristate | | | | | | | | | | 3 | 3 |
| | | Myristyl stearate | | | | | | | | | | | |
| | | Behenyl behenate | | | | | | | | | | | |
| Thixotropy-imparting agent | | Fumed silica (10 nm) | | | | | | | | | | | |
| Thermally conductive filler | | Aluminum oxide (spherical, 12 µm) | | 100 | 100 | 100 | 100 | 100 | 100 | 100 | 100 | 100 | 100 |
| | | Aluminum oxide (spherical, 45 µm) | | 400 | 400 | 400 | 400 | 400 | 400 | 400 | 400 | 400 | 400 |
| | | Aluminum hydroxide (irregular shape, 1 µm) | | 120 | 120 | 120 | 120 | 120 | 120 | 120 | 120 | 120 | 120 |
| | | Aluminum hydroxide (irregular shape, 10 µm) | | 100 | 100 | 100 | 100 | 100 | 100 | 100 | 100 | 100 | 100 |
| | | Aluminum hydroxide (irregular shape, 90 µm) | | 260 | 260 | 260 | 260 | 260 | 260 | 260 | 260 | 260 | 260 |
| Viscosity (Pa · s) | η1 | Shear rate 0.00252 | (1/s) | 33000 | 31951 | 60378 | 63155 | 11867 | 12425 | 22741 | 23852 | 34482 | 32944 |
| | | 0.0054 | | 12903 | 13298 | 23653 | 24323 | 4252 | 4455 | 7835 | 7985 | 12709 | 12763 |
| | | 0.0117 | | 5300 | 5391 | 9782 | 9459 | 1622 | 1550 | 2907 | 2978 | 4707 | 4802 |
| | | 0.0252 | | 2357 | 2391 | 4235 | 4387 | 752 | 729 | 1182 | 1217 | 2424 | 2493 |
| | η3 | 0.05432 | | 1195 | 1149 | 1991 | 2034 | 491 | 487 | 564 | 541 | 1577 | 1549 |
| | | 0.117 | | 703 | 714 | 1101 | 1056 | 447 | 452 | 355 | 352 | 849 | 847 |
| | | 0.252 | | 401 | 393 | 620 | 617 | 244 | 233 | 265 | 255 | 544 | 536 |
| | | 0.543 | | 224 | 232 | 348 | 363 | 202 | 212 | 191 | 191 | 400 | 414 |
| | | 1.17 | | 144 | 151 | 216 | 220 | 149 | 147 | 133 | 136 | 321 | 317 |
| | η2 | 2.52 | | 99 | 102 | 149 | 143 | 83 | 83 | 108 | 106 | 247 | 239 |
| | | 5.43 | | 55 | 53 | 98 | 94 | 50 | 49 | 89 | 88 | 151 | 153 |
| | | 11.7 | | 40 | 39 | 50 | 51 | 36 | 37 | 48 | 48 | 84 | 88 |
| Viscosity ratio (η1/η2) | | | | 333 | 313 | 405 | 442 | 143 | 149 | 211 | 224 | 140 | 138 |
| Viscosity ratio (η1/η3) | | | | 27.6 | 27.8 | 30.3 | 31.0 | 24.2 | 25.5 | 40.3 | 44.1 | 21.9 | 21.3 |
| Evaluation of suppression of sedimentation | | | | 5 | 5 | 5 | 5 | 3 | 3 | 4 | 4 | 5 | 5 |
| Compressibility | | | | 4 | | 4 | | 5 | | 4 | | 3 | |
| Comprehensive evaluation | | | | 4.5 | | 4.5 | | 4 | | 4 | | 4 | |

Table 2

| | | | | Example 6 | | Example 7 | | Example 8 | | Example 9 | | Example 10 | |
|---|---|---|---|---|---|---|---|---|---|---|---|---|---|
| | | | | First part | Second part | First part | Second part | First part | Second part | First part | Second part | First part | Second part |
| Liquid polymer | | Silicone A agent | (Part(s) by mass) | 90 | | 90 | | 70 | | 70 | | 50 | |
| | | Silicone B agent | | | 90 | | 90 | | 70 | | 70 | | 50 |
| Silicon compound | | n-decyltrimethoxysilane | | 1 | 1 | 1 | 1 | 1 | 1 | 1 | 1 | 1 | 1 |
| Compatibilizer | | 1-methylheptyl laurate | | 6.5 | 6.5 | 5.5 | 5.5 | 22.5 | 22.5 | 22 | 22 | 39 | 39 |
| Structural viscosity imparting agent | | Cetyl myristate | | | | | | | | | | | |
| | | Pentaerythritol distearate | | | | | | | | | | | |
| | | Myristyl myristate | | 2.5 | 2.5 | 3.5 | 3.5 | 6.5 | 6.5 | 7 | 7 | 10 | 10 |
| | | Myristyl stearate | | | | | | | | | | | |
| | | Behenyl behenate | | | | | | | | | | | |
| Thixotropy-imparting agent | | Fumed silica (10 nm) | | | | | | | | | | | |
| Thermally conductive filler | | Aluminum oxide (spherical, 12 μm) | | 100 | 100 | 100 | 100 | 100 | 100 | 100 | 100 | 100 | 100 |
| | | Aluminum oxide (spherical, 45 μm) | | 400 | 400 | 400 | 400 | 400 | 400 | 400 | 400 | 400 | 400 |
| | | Aluminum hydroxide (irregular shape, 1 μm) | | 120 | 120 | 120 | 120 | 120 | 120 | 120 | 120 | 120 | 120 |
| | | Aluminum hydroxide (irregular shape, 10 μm) | | 100 | 100 | 100 | 100 | 100 | 100 | 100 | 100 | 100 | 100 |
| | | Aluminum hydroxide (irregular shape, 90 μm) | | 260 | 260 | 260 | 260 | 260 | 260 | 260 | 260 | 260 | 260 |
| Viscosity (Pa · s) | η1 | Shear rate 0.00252 | (1/s) | 20090 | 20359 | 22307 | 22238 | 76593 | 78883 | 85210 | 87285 | 31604 | 30208 |
| | | 0.0054 | | 5845 | 5716 | 9662 | 9781 | 27737 | 28145 | 37439 | 39101 | 11709 | 11660 |
| | | 0.0117 | | 2202 | 2276 | 3591 | 3690 | 11228 | 11482 | 14829 | 14652 | 5108 | 4999 |
| | | 0.0252 | | 1026 | 1068 | 1508 | 1435 | 5054 | 5217 | 6610 | 6630 | 2295 | 2330 |
| | η3 | 0.05432 | | 1170 | 1165 | 1335 | 1361 | 2948 | 2960 | 3718 | 3733 | 1179 | 1196 |
| | | 0.117 | | 745 | 722 | 788 | 815 | 1344 | 1297 | 1928 | 2001 | 760 | 750 |
| | | 0.252 | | 480 | 502 | 480 | 503 | 724 | 699 | 1001 | 989 | 451 | 468 |
| | | 0.543 | | 315 | 303 | 324 | 337 | 384 | 371 | 598 | 572 | 230 | 224 |
| | | 1.17 | | 223 | 221 | 243 | 231 | 228 | 236 | 388 | 389 | 136 | 137 |
| | η2 | 2.52 | | 168 | 164 | 198 | 192 | 153 | 153 | 198 | 197 | 86 | 83 |
| | | 5.43 | | 111 | 111 | 148 | 150 | 108 | 103 | 119 | 122 | 60 | 59 |
| | | 11.7 | | 66 | 68 | 84 | 88 | 55 | 53 | 62 | 63 | 45 | 44 |
| Viscosity ratio (η1/η2) | | | | 120 | 124 | 113 | 116 | 501 | 516 | 430 | 444 | 367 | 364 |
| Viscosity ratio (η1/η3) | | | | 17.2 | 17.5 | 16.7 | 16.3 | 26.0 | 26.6 | 22.9 | 23.4 | 26.8 | 25.3 |
| Evaluation of suppression of sedimentation | | | | 4 | 4 | 4 | 4 | 5 | 5 | 5 | 5 | 5 | 5 |
| Compressibility | | | | 4 | | 4 | | 4 | | 4 | | 5 | |
| Comprehensive evaluation | | | | 4 | | 4 | | 4.5 | | 4.5 | | 5 | |

Table 3

| | | | | Example 11 | | Example 12 | | Example 13 | | Example 14 | | Example 15 | |
|---|---|---|---|---|---|---|---|---|---|---|---|---|---|
| | | | | First part | Second part | First part | Second part | First part | Second part | First part | Second part | First part | Second part |
| Liquid polymer | Silicone A agent | | (Part(s) by mass) | 98 | | 97 | | 96 | | 90 | | 90 | |
| | Silicone B agent | | | | 98 | | 97 | | 96 | | 90 | | 90 |
| Silicon compound | n-decyltrimethoxysilane | | | 1 | 1 | 1 | 1 | 1 | 1 | 1 | 1 | 1 | 1 |
| Compatibilizer | 1-methylheptyl laurate | | | 0 | 0 | 0 | 0 | 0 | 0 | 7.8 | 7.8 | 7 | 7 |
| Structural viscosity imparting agent | Cetyl myristate | | | | | | | | | | | | |
| | Pentaerythritol distearate | | | | | | | | | | | | |
| | Myristyl myristate | | | | | | | | | | | | |
| | Myristyl stearate | | | 1 | 1 | 2 | 2 | 3 | 3 | 1.2 | 1.2 | 2 | 2 |
| | Behenyl behenate | | | | | | | | | | | | |
| Thixotropy-imparting agent | Fumed silica (10 nm) | | | | | | | | | | | | |
| Thermally conductive filler | Aluminum oxide (spherical, 12 μm) | | | 100 | 100 | 100 | 100 | 100 | 100 | 100 | 100 | 100 | 100 |
| | Aluminum oxide (spherical, 45 μm) | | | 400 | 400 | 400 | 400 | 400 | 400 | 400 | 400 | 400 | 400 |
| | Aluminum hydroxide (irregular shape, 1 μm) | | | 120 | 120 | 120 | 120 | 120 | 120 | 120 | 120 | 120 | 120 |
| | Aluminum hydroxide (irregular shape, 10 μm) | | | 100 | 100 | 100 | 100 | 100 | 100 | 100 | 100 | 100 | 100 |
| | Aluminum hydroxide (irregular shape, 90 μm) | | | 260 | 260 | 260 | 260 | 260 | 260 | 260 | 260 | 260 | 260 |
| Viscosity (Pa·s) | η1 | Shear rate 0.00252 | (1/s) | 12988 | 13422 | 27611 | 27949 | 40179 | 40153 | 14407 | 14535 | 28012 | 26718 |
| | | 0.0054 | | 4708 | 4832 | 11267 | 11684 | 17120 | 16414 | 5721 | 5724 | 11128 | 11451 |
| | | 0.0117 | | 1833 | 1888 | 4399 | 4322 | 6987 | 6765 | 2177 | 2219 | 4450 | 4447 |
| | | 0.0252 | | 1238 | 1240 | 2404 | 2468 | 3531 | 3459 | 1076 | 1068 | 2113 | 2094 |
| | η3 | 0.05432 | | 1031 | 1061 | 1565 | 1521 | 2046 | 1999 | 992 | 974 | 1548 | 1507 |
| | | 0.117 | | 653 | 631 | 908 | 910 | 1206 | 1213 | 663 | 689 | 840 | 819 |
| | | 0.252 | | 492 | 514 | 560 | 588 | 689 | 667 | 486 | 464 | 544 | 533 |
| | | 0.543 | | 396 | 415 | 413 | 423 | 462 | 461 | 359 | 360 | 391 | 376 |
| | | 1.17 | | 308 | 295 | 332 | 339 | 365 | 377 | 274 | 287 | 302 | 300 |
| | η2 | 2.52 | | 204 | 208 | 252 | 252 | 287 | 295 | 193 | 193 | 231 | 237 |
| | | 5.43 | | 122 | 122 | 141 | 139 | 200 | 199 | 115 | 119 | 143 | 142 |
| | | 11.7 | | 75 | 72 | 82 | 80 | 103 | 105 | 68 | 68 | 76 | 80 |
| Viscosity ratio (η1/η2) | | | | 64 | 65 | 110 | 111 | 140 | 136 | 75 | 75 | 121 | 113 |
| Viscosity ratio (η1/η3) | | | | 12.6 | 12.7 | 17.6 | 18.4 | 19.6 | 20.1 | 14.5 | 14.9 | 18.1 | 17.7 |
| Evaluation of suppression of sedimentation | | | | 3 | 3 | 4 | 4 | 5 | 5 | 3 | 3 | 4 | 4 |
| Compressibility | | | | 3 | | 2 | | 2 | | 4 | | 3 | |
| Comprehensive evaluation | | | | 3 | | 3 | | 3.5 | | 3.5 | | 3.5 | |

Table 4

| | | | | Example 16 | | Example 17 | | Example 18 | | Example 19 | | Example 20 | |
|---|---|---|---|---|---|---|---|---|---|---|---|---|---|
| | | | | First part | Second part | First part | Second part | First part | Second part | First part | Second part | First part | Second part |
| Liquid polymer | Silicone A agent | | (Part(s) by mass) | 70 | | 70 | | 50 | | 98 | | 97.5 | |
| | Silicone B agent | | | | 70 | | 70 | | 50 | | 98 | | 97.5 |
| Silicon compound | n-decyltrimethoxysilane | | | 1 | 1 | 1 | 1 | 1 | 1 | 1 | 1 | 1 | 1 |
| Compatibilizer | 1-methylheptyl laurate | | | 27 | 27 | 26 | 26 | 45.5 | 45.5 | 0 | 0 | 0 | 0 |
| Structural viscosity imparting agent | Cetyl myristate | | | | | | | | | | | | |
| | Pentaerythritol distearate | | | | | | | | | | | | |
| | Myristyl myristate | | | | | | | | | | | | |
| | Myristyl stearate | | | 2 | 2 | 3 | 3 | 3.5 | 3.5 | | | | |
| | Behenyl behenate | | | | | | | | | 1 | 1 | 1.5 | 1.5 |
| Thixotropy-imparting agent | Fumed silica (10 nm) | | | | | | | | | | | | |
| Thermally conductive filler | Aluminum oxide (spherical, 12 $\mu$m) | | | 100 | 100 | 100 | 100 | 100 | 100 | 100 | 100 | 100 | 100 |
| | Aluminum oxide (spherical, 45 $\mu$m) | | | 400 | 400 | 400 | 400 | 400 | 400 | 400 | 400 | 400 | 400 |
| | Aluminum hydroxide (irregular shape, 1 $\mu$m) | | | 120 | 120 | 120 | 120 | 120 | 120 | 120 | 120 | 120 | 120 |
| | Aluminum hydroxide (irregular shape, 10 $\mu$m) | | | 100 | 100 | 100 | 100 | 100 | 100 | 100 | 100 | 100 | 100 |
| | Aluminum hydroxide (irregular shape, 90 $\mu$m) | | | 260 | 260 | 260 | 260 | 260 | 260 | 260 | 260 | 260 | 260 |
| Viscosity (Pa · s) | η1 | Shear rate 0.00252 | (1/s) | 16862 | 17525 | 21681 | 22018 | 10302 | 10177 | 23390 | 24465 | 27661 | 27672 |
| | | 0.0054 | | 6249 | 5997 | 8911 | 8803 | 5795 | 5658 | 11303 | 11114 | 14217 | 13729 |
| | | 0.0117 | | 2343 | 2375 | 3712 | 3895 | 2762 | 2702 | 4268 | 4426 | 5269 | 5506 |
| | | 0.0252 | | 1037 | 1075 | 1673 | 1710 | 1302 | 1292 | 1991 | 2057 | 2536 | 2443 |
| | η3 | 0.05432 | | 745 | 712 | 971 | 980 | 686 | 719 | 1361 | 1318 | 1433 | 1494 |
| | | 0.117 | | 456 | 437 | 683 | 672 | 509 | 527 | 802 | 836 | 748 | 720 |
| | | 0.252 | | 338 | 347 | 377 | 370 | 265 | 277 | 561 | 560 | 514 | 536 |
| | | 0.543 | | 219 | 209 | 246 | 241 | 176 | 183 | 437 | 421 | 400 | 384 |
| | | 1.17 | | 162 | 160 | 177 | 169 | 119 | 115 | 342 | 357 | 320 | 322 |
| | η2 | 2.52 | | 127 | 124 | 138 | 135 | 91 | 92 | 250 | 246 | 233 | 222 |
| | | 5.43 | | 83 | 80 | 104 | 109 | 68 | 65 | 146 | 153 | 134 | 140 |
| | | 11.7 | | 47 | 47 | 57 | 56 | 39 | 41 | 86 | 88 | 79 | 77 |
| Viscosity ratio (η1/η2) | | | | 133 | 142 | 157 | 164 | 113 | 111 | 94 | 99 | 119 | 125 |
| Viscosity ratio (η1/η3) | | | | 22.6 | 24.6 | 22.3 | 22.5 | 15.0 | 14.1 | 17.2 | 18.6 | 19.3 | 18.5 |
| Evaluation of suppression of sedimentation | | | | 3 | 3 | 4 | 4 | 3 | 3 | 4 | 4 | 4 | 4 |
| Compressibility | | | | 4 | | 4 | | 5 | | 3 | | 3 | |
| Comprehensive evaluation | | | | 3.5 | | 4 | | 4 | | 3.5 | | 3.5 | |

Table 5

| | | | | Example 21 | | Example 22 | | Example 23 | | Example 24 | | Comparative Example 1 | |
|---|---|---|---|---|---|---|---|---|---|---|---|---|---|
| | | | | First part | Second part | First part | Second part | First part | Second part | First part | Second part | First part | Second part |
| Liquid polymer | | Silicone A agent | (Part(s) by mass) | 90 | | 90 | | 70 | | 50 | | 96.5 | |
| | | Silicone B agent | | | 90 | | 90 | | 70 | | 50 | | 96.5 |
| Silicon compound | | n-decyltrimethoxysilane | | 1 | 1 | 1 | 1 | 1 | 1 | 1 | 1 | 1.5 | 1.5 |
| Compatibilizer | | 1-methylheptyl laurate | | 8.3 | 8.3 | 7.5 | 7.5 | 27 | 27 | 46 | 46 | | |
| Structural viscosity imparting agent | | Cetyl myristate | | | | | | | | | | | |
| | | Pentaerythritol distearate | | | | | | | | | | | |
| | | Myristyl myristate | | | | | | | | | | | |
| | | Myristyl stearate | | | | | | | | | | | |
| | | Behenyl behenate | | 0.7 | 0.7 | 1.5 | 1.5 | 2 | 2 | 3 | 3 | | |
| Thixotropy-imparting agent | | Fumed silica (10 nm) | | | | | | | | | | 2 | 2 |
| Thermally conductive filler | | Aluminum oxide (spherical, 12 μm) | | 100 | 100 | 100 | 100 | 100 | 100 | 100 | 100 | 100 | 100 |
| | | Aluminum oxide (spherical, 45 μm) | | 400 | 400 | 400 | 400 | 400 | 400 | 400 | 400 | 400 | 400 |
| | | Aluminum hydroxide (irregular shape, 1 μm) | | 120 | 120 | 120 | 120 | 120 | 120 | 120 | 120 | 120 | 120 |
| | | Aluminum hydroxide (irregular shape, 10 μm) | | 100 | 100 | 100 | 100 | 100 | 100 | 100 | 100 | 100 | 100 |
| | | Aluminum hydroxide (irregular shape, 90 μm) | | 260 | 260 | 260 | 260 | 260 | 260 | 260 | 260 | 260 | 260 |
| Viscosity (Pa · s) | η1 | Shear rate 0.00252 | (1/s) | 15936 | 15335 | 21459 | 21264 | 16346 | 16115 | 12118 | 11794 | 12002 | 11749 |
| | | 0.0054 | | 7248 | 6938 | 10880 | 11029 | 6871 | 7048 | 5347 | 5560 | 11450 | 11289 |
| | | 0.0117 | | 2694 | 2567 | 4009 | 4117 | 2444 | 2329 | 2159 | 2254 | 7311 | 6992 |
| | | 0.0252 | | 1211 | 1256 | 1643 | 1638 | 1011 | 1050 | 893 | 883 | 4541 | 4678 |
| | η3 | 0.05432 | | 707 | 701 | 1147 | 1190 | 640 | 616 | 441 | 460 | 3042 | 3131 |
| | | 0.117 | | 516 | 512 | 688 | 672 | 481 | 467 | 372 | 378 | 1973 | 2017 |
| | | 0.252 | | 479 | 503 | 472 | 481 | 324 | 318 | 215 | 221 | 1188 | 1209 |
| | | 0.543 | | 369 | 369 | 356 | 356 | 225 | 224 | 150 | 155 | 700 | 731 |
| | | 1.17 | | 278 | 266 | 292 | 283 | 171 | 170 | 111 | 114 | 419 | 433 |
| | η2 | 2.52 | | 201 | 200 | 226 | 233 | 134 | 140 | 90 | 88 | 266 | 268 |
| | | 5.43 | | 117 | 114 | 154 | 152 | 95 | 98 | 71 | 72 | 167 | 163 |
| | | 11.7 | | 67 | 66 | 84 | 85 | 53 | 54 | 48 | 47 | 119 | 120 |
| Viscosity ratio (η1/η2) | | | | 79 | 77 | 95 | 91 | 122 | 115 | 135 | 135 | 45 | 44 |
| Viscosity ratio (η1/η3) | | | | 22.5 | 21.9 | 18.7 | 17.9 | 25.5 | 26.2 | 27.5 | 25.7 | 3.9 | 3.8 |
| Evaluation of suppression of sedimentation | | | | 3 | 3 | 4 | 4 | 3 | 3 | 3 | 3 | 3 | 3 |
| Compressibility | | | | 3 | | 3 | | 4 | | 5 | | 2 | |
| Comprehensive evaluation | | | | 3 | | 3.5 | | 3.5 | | 4 | | 2.5 | |

Table 6

| | | | | Example 25 | | Example 26 | | Example 27 | | Example 28 | | Example 29 | |
|---|---|---|---|---|---|---|---|---|---|---|---|---|---|
| | | | | First part | Second part | First part | Second part | First part | Second part | First part | Second part | First part | Second part |
| Liquid polymer | | Silicone A agent | (Part(s) by mass) | 70 | | 70 | | 70 | | 70 | | 70 | |
| | | Silicone B agent | | | 70 | | 70 | | 70 | | 70 | | 70 |
| Silicon compound | | n-decyltrimethoxysilane | | 1 | 1 | 1 | 1 | 1 | 1 | 1 | 1 | 1 | 1 |
| Compatibilizer | | 1-methylheptyl laurate | | 26 | 26 | 24 | 24 | 28 | 28 | 26 | 26 | 24 | 24 |
| Structural viscosity imparting agent | | Glycerol monostearate | | 3 | 3 | 5 | 5 | | | | | | |
| | | Ethylene glycol distearate | | | | | | 1 | 1 | 3 | 3 | 5 | 5 |
| | | Behenyl alcohol | | | | | | | | | | | |
| Thixotropy-imparting agent | | Fumed silica (10 nm) | | | | | | | | | | | |
| Thermally conductive filler | | Aluminum oxide (spherical, 12 μm) | | 100 | 100 | 100 | 100 | 100 | 100 | 100 | 100 | 100 | 100 |
| | | Aluminum oxide (spherical, 45 μm) | | 400 | 400 | 400 | 400 | 400 | 400 | 400 | 400 | 400 | 400 |
| | | Aluminum hydroxide (irregular shape, 1 μm) | | 120 | 120 | 120 | 120 | 120 | 120 | 120 | 120 | 120 | 120 |
| | | Aluminum hydroxide (irregular shape, 10 μm) | | 100 | 100 | 100 | 100 | 100 | 100 | 100 | 100 | 100 | 100 |
| | | Aluminum hydroxide (irregular shape, 90 μm) | | 260 | 260 | 260 | 260 | 260 | 260 | 260 | 260 | 260 | 260 |
| Viscosity (Pa · s) | η1 | Shear rate 0.00252 | (1/s) | 12648 | 12976 | 29115 | 29876 | 6611 | 6782 | 21665 | 22227 | 53845 | 55240 |
| | | 0.0054 | | 5585 | 5695 | 11349 | 11574 | 3168 | 3231 | 9957 | 10153 | 24787 | 25274 |
| | | 0.0117 | | 2436 | 2532 | 4191 | 4354 | 1510 | 1570 | 4515 | 4694 | 10991 | 11425 |
| | | 0.0252 | | 1170 | 1210 | 1600 | 1654 | 796 | 823 | 2192 | 2266 | 4936 | 5103 |
| | η3 | 0.05432 | | 773 | 780 | 822 | 829 | 502 | 506 | 1323 | 1335 | 2557 | 2579 |
| | | 0.117 | | 611 | 629 | 590 | 607 | 389 | 400 | 847 | 872 | 1498 | 1542 |
| | | 0.252 | | 464 | 463 | 474 | 473 | 388 | 387 | 596 | 594 | 905 | 904 |
| | | 0.543 | | 377 | 373 | 307 | 304 | 331 | 328 | 461 | 456 | 609 | 603 |
| | | 1.17 | | 286 | 288 | 247 | 249 | 244 | 246 | 351 | 353 | 450 | 453 |
| | η2 | 2.52 | | 198 | 196 | 198 | 196 | 156 | 154 | 253 | 250 | 331 | 328 |
| | | 5.43 | | 127 | 127 | 152 | 151 | 93 | 93 | 169 | 168 | 236 | 236 |
| | | 11.7 | | 79 | 78 | 109 | 107 | 57 | 56 | 102 | 100 | 156 | 153 |
| Viscosity ratio (η1/η2) | | | | 64 | 66 | 147 | 152 | 42 | 44 | 86 | 89 | 162 | 169 |
| Viscosity ratio (η1/η3) | | | | 16.4 | 16.6 | 35.4 | 36.0 | 13.2 | 13.4 | 16.4 | 16.7 | 21.1 | 21.4 |
| Evaluation of suppression of sedimentation | | | | 3 | 3 | 4 | 4 | 2 | 2 | 4 | 4 | 5 | 5 |
| Compressibility | | | | 4 | | 4 | | 4 | | 3 | | 2 | |
| Comprehensive evaluation | | | | 3.5 | | 4 | | 3 | | 3.5 | | 3.5 | |

Table 7

| | | | | | Example 30 | | Example 31 | | Example 32 | | Example 33 | |
|---|---|---|---|---|---|---|---|---|---|---|---|---|
| | | | | | First part | Second part | First part | Second part | First part | Second part | First part | Second part |
| Liquid polymer | Silicone A agent | | | (Part(s) by mass) | 70 | | 70 | | 70 | | 70 | |
| | Silicone B agent | | | | | 70 | | 70 | | 70 | | 70 |
| Silicon compound | n-decyltrimethoxysilane | | | | 1 | 1 | 1 | 1 | 1 | 1 | 1 | 1 |
| Compatibilizer | 1-methylheptyl laurate | | | | 28 | 28 | 25 | 25 | 24 | 24 | 23 | 23 |
| Structural viscosity imparting agent | Glycerol monostearate | | | | | | | | | | | |
| | Ethylene glycol distearate | | | | | | | | | | | |
| | Behenyl alcohol | | | | 1 | 1 | 3 | 3 | 4 | 4 | 5 | 5 |
| Thixotropy-imparting agent | Fumed silica (10 nm) | | | | | | | | | | | |
| Thermally conductive filler | Aluminum oxide (spherical, 12 μm) | | | | 100 | 100 | 100 | 100 | 100 | 100 | 100 | 100 |
| | Aluminum oxide (spherical, 45 μm) | | | | 400 | 400 | 400 | 400 | 400 | 400 | 400 | 400 |
| | Aluminum hydroxide (irregular shape, 1 μm) | | | | 120 | 120 | 120 | 120 | 120 | 120 | 120 | 120 |
| | Aluminum hydroxide (irregular shape, 10 μm) | | | | 100 | 100 | 100 | 100 | 100 | 100 | 100 | 100 |
| | Aluminum hydroxide (irregular shape, 90 μm) | | | | 260 | 260 | 260 | 260 | 260 | 260 | 260 | 260 |
| Viscosity (Pa · s) | η1 | Shear rate | 0.00252 | (1/s) | 10021 | 10093 | 34489 | 35385 | 69528 | 71335 | 176584 | 181195 |
| | | | 0.0054 | | 4685 | 4777 | 14860 | 15153 | 30187 | 30783 | 71318 | 72728 |
| | | | 0.0117 | | 2163 | 2249 | 6310 | 6559 | 12167 | 12643 | 27978 | 29070 |
| | | | 0.0252 | | 1069 | 1105 | 2886 | 2983 | 4949 | 5117 | 11130 | 11507 |
| | η3 | | 0.05432 | | 630 | 635 | 1598 | 1611 | 2443 | 2463 | 5011 | 5051 |
| | | | 0.117 | | 448 | 461 | 945 | 973 | 1369 | 1410 | 2463 | 2537 |
| | | | 0.252 | | 337 | 337 | 560 | 559 | 769 | 769 | 1347 | 1346 |
| | | | 0.543 | | 250 | 247 | 365 | 361 | 454 | 448 | 742 | 732 |
| | | | 1.17 | | 175 | 176 | 265 | 267 | 304 | 306 | 417 | 420 |
| | η2 | | 2.52 | | 112 | 111 | 203 | 201 | 226 | 223 | 292 | 289 |
| | | | 5.43 | | 68 | 68 | 148 | 148 | 168 | 168 | 209 | 209 |
| | | | 11.7 | | 41 | 41 | 91 | 90 | 111 | 109 | 137 | 135 |
| Viscosity ratio (η1/η2) | | | | | 90 | 91 | 170 | 176 | 308 | 320 | 604 | 627 |
| Viscosity ratio (η1/η3) | | | | | 15.9 | 15.9 | 21.6 | 22.0 | 28.5 | 29.0 | 35.2 | 35.9 |
| Evaluation of suppression of sedimentation | | | | | 3 | 3 | 5 | 5 | 5 | 5 | 5 | 5 |
| Compressibility | | | | | 4 | | 3 | | 3 | | 2 | |
| Comprehensive evaluation | | | | | 3.5 | | 4 | | 4 | | 3.5 | |

Table 8

| | | | | | Comparative Example 2 | | Comparative Example 3 | | Comparative Example 4 | |
|---|---|---|---|---|---|---|---|---|---|---|
| | | | | | First part | Second part | First part | Second part | First part | Second part |
| Liquid polymer | Silicone A agent | | | (Part(s) by mass) | 70 | | 70 | | 70 | |
| | Silicone B agent | | | | | 70 | | 70 | | 70 |
| Silicon compound | n-decyltrimethoxysilane | | | | 1 | 1 | 1 | 1 | 1 | 1 |
| Compatibilizer | 1-methylheptyl laurate | | | | 28 | 28 | 26 | 26 | 24 | 24 |
| Structural viscosity imparting agent | Glycerol monostearate | | | | | | | | | |
| | Ethylene glycol distearate | | | | | | | | | |
| | Behenyl alcohol | | | | | | | | | |
| | PEG-PPG-PEG copolymer | | | | 1 | 1 | 3 | 3 | 5 | 5 |
| Thixotropy-imparting agent | Fumed silica (10 nm) | | | | | | | | | |
| Thermally conductive filler | Aluminum oxide (spherical, 12 μm) | | | | 100 | 100 | 100 | 100 | 100 | 100 |
| | Aluminum oxide (spherical, 45 μm) | | | | 400 | 400 | 400 | 400 | 400 | 400 |
| | Aluminum hydroxide (irregular shape, 1 μm) | | | | 120 | 120 | 120 | 120 | 120 | 120 |
| | Aluminum hydroxide (irregular shape, 10 μm) | | | | 100 | 100 | 100 | 100 | 100 | 100 |
| | Aluminum hydroxide (irregular shape, 90 μm) | | | | 260 | 260 | 260 | 260 | 260 | 260 |
| Viscosity (Pa · s) | η1 | Shear rate | 0.00252 | (1/s) | 1141 | 1170 | 2591 | 2658 | 3301 | 3346 |
| | | | 0.0054 | | 643 | 656 | 1304 | 1330 | 1934 | 1966 |
| | | | 0.0117 | | 369 | 384 | 657 | 684 | 985 | 1024 |
| | | | 0.0252 | | 234 | 242 | 367 | 379 | 569 | 588 |
| | η3 | | 0.05432 | | 156 | 157 | 278 | 281 | 352 | 339 |
| | | | 0.117 | | 162 | 166 | 253 | 260 | 202 | 208 |
| | | | 0.252 | | 238 | 236 | 279 | 278 | 185 | 184 |
| | | | 0.543 | | 239 | 237 | 273 | 270 | 219 | 217 |
| | | | 1.17 | | 174 | 175 | 207 | 209 | 229 | 230 |
| | η2 | | 2.52 | | 112 | 111 | 140 | 139 | 184 | 182 |
| | | | 5.43 | | 71 | 71 | 91 | 91 | 136 | 136 |
| | | | 11.7 | | 47 | 46 | 59 | 58 | 99 | 98 |
| Viscosity ratio (η1/η2) | | | | | 10 | 11 | 18 | 19 | 18 | 18 |
| Viscosity ratio (η1/η3) | | | | | 7.3 | 7.5 | 9.3 | 9.5 | 9.4 | 9.9 |
| Evaluation of suppression of sedimentation | | | | | 1 | 1 | 1 | 1 | 1 | 1 |
| Compressibility | | | | | 4 | | 4 | | 4 | |
| Comprehensive evaluation | | | | | 2.5 | | 2.5 | | 2.5 | |

Table 9

| | | | | Comparative Example 5 | | Comparative Example 6 | | Comparative Example 7 | | Comparative Example 8 | | Comparative Example 9 | |
|---|---|---|---|---|---|---|---|---|---|---|---|---|---|
| | | | | First part | Second part | First part | Second part | First part | Second part | First part | Second part | First part | Second part |
| Liquid polymer | | Silicone A agent | (Part(s) by mass) | 96 | | 90 | | 70 | | 70 | | 50 | |
| | | Silicone B agent | | | 96 | | 90 | | 70 | | 70 | | 50 |
| Silicon compound | | n-decyltrimethoxysilane | | 1 | 1 | 1 | 1 | 1 | 1 | 1.5 | 1.5 | 1 | 1 |
| Compatibilizer | | 1-methylheptyl laurate | | 0 | 0 | 6.5 | 6.5 | 22 | 22 | 23.5 | 23.5 | 46 | 46 |
| Structural viscosity imparting agent | | Cetyl myristate | | | | | | | | 5 | 5 | | |
| | | Pentaerythritol distearate | | | | | | | | | | | |
| | | Myristyl myristate | | 3 | 3 | 2.5 | 2.5 | 7 | 7 | | | | |
| | | Myristyl stearate | | | | | | | | | | | |
| | | Behenyl behenate | | | | | | | | | | 3 | 3 |
| Thixotropy-imparting agent | | Fumed silica (10 nm) | | | | | | | | | | | |
| Thermally conductive filler | | Aluminum oxide (spherical, 12 μm) | | 100 | 100 | 100 | 100 | 100 | 100 | 100 | 100 | 100 | 100 |
| | | Aluminum oxide (spherical, 45 μm) | | 400 | 400 | 400 | 400 | 400 | 400 | 400 | 400 | 400 | 400 |
| | | Aluminum hydroxide (irregular shape, 1 μm) | | 120 | 120 | 120 | 120 | 120 | 120 | 120 | 120 | 120 | 120 |
| | | Aluminum hydroxide (irregular shape, 10 μm) | | 100 | 100 | 100 | 100 | 100 | 100 | 100 | 100 | 100 | 100 |
| | | Aluminum hydroxide (irregular shape, 90 μm) | | 260 | 260 | 260 | 260 | 260 | 260 | 260 | 260 | 260 | 260 |
| Viscosity 2 (Pa · s) | η1 | Shear rate 0.00252 | (1/s) | 7020 | 7224 | 2674 | 2743 | 2551 | 3741 | 885 | 1173 | 715 | 734 |
| | | 0.0054 | | 3358 | 3435 | 1211 | 1235 | 1366 | 1956 | 517 | 581 | 380 | 387 |
| | | 0.0117 | | 1782 | 1854 | 748 | 778 | 812 | 1024 | 325 | 372 | 241 | 250 |
| | | 0.0252 | | 1208 | 1249 | 635 | 656 | 640 | 808 | 258 | 297 | 167 | 173 |
| | η3 | 0.05432 | | 816 | 823 | 574 | 579 | 645 | 605 | 244 | 347 | 178 | 180 |
| | | 0.117 | | 656 | 675 | 526 | 540 | 676 | 651 | 288 | 325 | 155 | 160 |
| | | 0.252 | | 546 | 545 | 485 | 483 | 567 | 539 | 297 | 323 | 165 | 164 |
| | | 0.543 | | 426 | 421 | 388 | 383 | 381 | 366 | 241 | 263 | 151 | 150 |
| | | 1.17 | | 306 | 308 | 277 | 279 | 240 | 233 | 167 | 186 | 119 | 120 |
| | η2 | 2.52 | | 209 | 206 | 185 | 183 | 152 | 149 | 107 | 119 | 83 | 83 |
| | | 5.43 | | 144 | 144 | 124 | 124 | 100 | 100 | 68 | 76 | 56 | 55 |
| | | 11.7 | | 97 | 95 | 82 | 80 | 66 | 67 | 45 | 50 | 37 | 36 |
| Viscosity ratio (η1/η2) | | | | 34 | 35 | 14 | 15 | 17 | 25 | 8 | 10 | 9 | 9 |
| Viscosity ratio (η1/η3) | | | | 8.6 | 8.8 | 4.7 | 4.7 | 4.0 | 6.2 | 3.6 | 3.4 | 4.0 | 4.1 |
| Evaluation of suppression of sedimentation 2 | | | | 2 | 2 | 1 | 1 | 1 | 1 | 1 | 1 | 1 | 1 |
| Compressibility 2 | | | | 3 | | 4 | | 4 | | 4 | | 4 | |
| Comprehensive evaluation | | | | 2.5 | | 2.5 | | 2.5 | | 2.5 | | 2.5 | |

The results of Examples show that sedimentation of the thermally conductive filler in storage is suppressed in the thermally conductive compositions of the present invention (the first part and the second part) which satisfy the viscosity ratio (η1/η3) of more than 10, and since the thermally conductive compositions have excellent compressibility, they can be handled well.

Furthermore, since the compound used as the compatibilizer is an ester compound, generation of low molecular weight siloxane can be suppressed compared to the method for reducing viscosity using silicone oil or the like.

By contrast, in Comparative Example 1, in which fumed silica was used without using structural viscosity imparting agent, the viscosity ratio (η1/η3) was as small as 3.8 to 3.9, and the comprehensive evaluation based on the results of the evaluation of suppression of sedimentation and the results of the evaluation of compressibility was worse than those in all Examples.

In Comparative Examples 2 to 4, in which PEG-PPG-PEG copolymer was used as the structural viscosity imparting agent, the PEG-PPG-PEG copolymer was poorly compatible with organopolysiloxane, and the viscosity ratio (η1/η3) was as small as 7.3 to 9.9. The results of the evaluation of suppression of sedimentation and the comprehensive evaluation were poor.

In Comparative Examples 5 to 9, in which the thermally conductive composition (the first part and the second part) including the structural viscosity imparting agent used in Examples was prepared without the heating step or the cooling step, the viscosity ratio (η1/η3) was as small as 3.4 to 8.8, and the comprehensive evaluation was poor.

Reference Signs List

10 Battery module
11 Battery cell
12 Battery module housing (module housing)
13 Spacer

## Claims

1. A thermally conductive composition comprising a liquid polymer, a thermally conductive filler and a structural viscosity imparting agent, the thermally conductive composition having a viscosity ratio ($\eta 1/\eta 3$) between a viscosity $\eta 1$ measured by a rheometer under conditions of a measurement temperature of 25°C and a shear rate of 0.00252 (1/s) and a viscosity $\eta 3$ measured by a rheometer under conditions of a measurement temperature of 25°C and a shear rate of 0.05432 (1/s) of more than 10.

2. The thermally conductive composition according to claim 1, wherein the liquid polymer is organopolysiloxane.

3. The thermally conductive composition according to claim 1 or 2, wherein the liquid polymer is an addition reaction-curable silicone.

4. The thermally conductive composition according to claim 1, wherein the liquid polymer is alkenyl group-containing organopolysiloxane.

5. The thermally conductive composition according to claim 1, wherein the liquid polymer is hydrogen organopolysiloxane.

6. The thermally conductive composition according to any of claims 1 to 5, wherein the structural viscosity imparting agent is an ester compound that is solid at 25°C.

7. The thermally conductive composition according to any of claims 1 to 6, wherein the structural viscosity imparting agent is an ester compound having a melting point of more than 25°C and 120°C or less.

8. The thermally conductive composition according to any of claims 1 to 7, wherein a content of the structural viscosity imparting agent is 0.5 to 20 parts by mass based on 100 parts by mass of the liquid polymer.

9. The thermally conductive composition according to any of claims 1 to 7, further comprising a compatibilizer.

10. The thermally conductive composition according to claim 9, wherein the compatibilizer is an ester compound that is liquid at 25°C.

11. The thermally conductive composition according to claim 10, wherein the ester compound that is liquid at 25°C is a monoester having 12 to 28 carbon atoms.

12. The thermally conductive composition according to any of claims 9 to 11, wherein a content of the compatibilizer is 50 parts by mass or less based on 100 parts by mass of the liquid polymer.

13. The thermally conductive composition according to any of claims 9 to 12, wherein the content of the compatibilizer is not less than twice and not more than 5 times the content of the structural viscosity imparting agent.

14. The thermally conductive composition according to any of claims 9 to 13, wherein the content of the structural viscosity imparting agent is X part(s) by mass or more, which is represented by the following equation (1), based on 100 parts by mass of the liquid polymer:

$$X \text{ (part(s) by mass)} = 0.5 + w \times 0.2 \qquad \text{equation (1)}$$

wherein, w represents the content (part(s) by mass) of the compatibilizer based on 100 parts by mass of the liquid polymer.

**15.** A two-part curable thermally conductive material comprising: a first part comprising the thermally conductive composition according to claim 4, and a second part comprising the thermally conductive composition according to claim 5.

**16.** A supply form of a thermally conductive composition, comprising a container filled with the thermally conductive composition according to any of claims 1 to 14.

**17.** A supply form of a two-part curable thermally conductive material, comprising: a first container filled with a first part comprising the thermally conductive composition according to claim 4, and a second container filled with a second part comprising the thermally conductive composition according to claim 5.

**18.** A thermally conductive member, which is a cured product of the thermally conductive composition according to any of claims 1 to 14 or the two-part curable thermally conductive material according to claim 15.

**19.** A battery module comprising: a spacer comprising the thermally conductive member according to claim 18; a plurality of battery cells; and a module housing that houses the plurality of battery cells, wherein the spacer is arranged in the module housing.

**20.** A method for producing a thermally conductive composition, the method comprising performing:

a step of preparing a mixture comprising a liquid polymer, a thermally conductive filler and a structural viscosity imparting agent;
a step of heating the mixture; and
a step of cooling the mixture to adjust a viscosity ratio ($\eta 1/\eta 3$) between a viscosity $\eta 1$ of the mixture measured by a rheometer under conditions of a measurement temperature of 25°C and a shear rate of 0.00252 (1/s) and a viscosity $\eta 3$ of the mixture measured by a rheometer under conditions of a measurement temperature of 25°C and a shear rate of 0.05432 (1/s) to more than 10.

**21.** A method for producing a supply form of a thermally conductive composition, the method comprising performing:

a step of preparing a mixture comprising a liquid polymer, a thermally conductive filler and a structural viscosity imparting agent;
a step of filling a container with the mixture;
a step of heating the mixture; and
a step of cooling the mixture to adjust a viscosity ratio ($\eta 1/\eta 3$) between a viscosity $\eta 1$ of the mixture measured by a rheometer under conditions of a measurement temperature of 25°C and a shear rate of 0.00252 (1/s) and a viscosity $\eta 3$ of the mixture measured by a rheometer under conditions of a measurement temperature of 25°C and a shear rate of 0.05432 (1/s) to more than 10.

Fig. 1

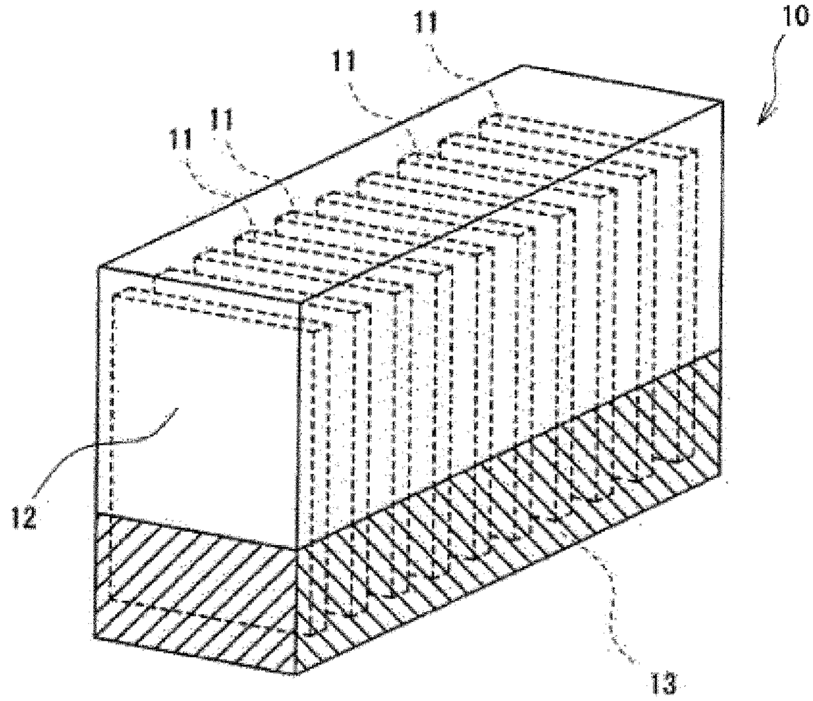


Fig. 2

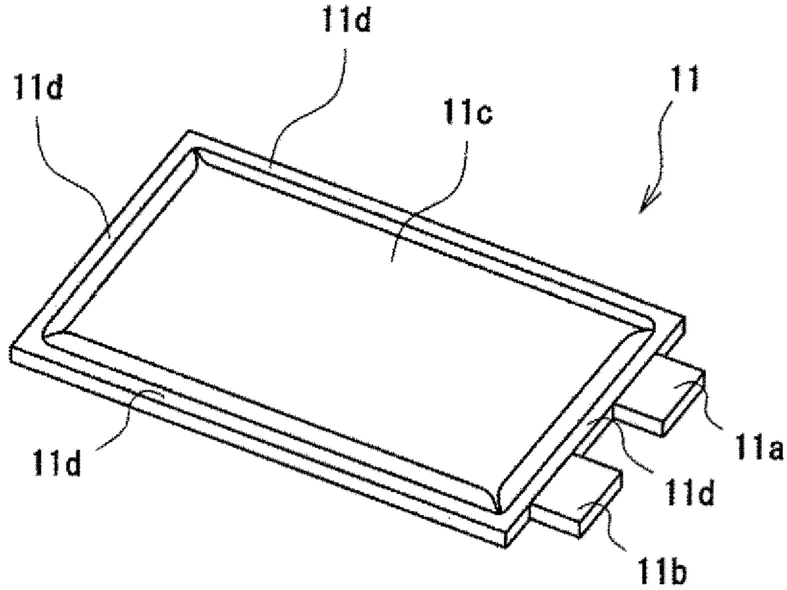

**INTERNATIONAL SEARCH REPORT**

International application No.
**PCT/JP2022/041195**

**A. CLASSIFICATION OF SUBJECT MATTER**

***C08L 101/00***(2006.01)i; ***C08K 5/101***(2006.01)i; ***C08L 83/04***(2006.01)i; ***C08L 83/07***(2006.01)i; ***C09K 5/06***(2006.01)i; ***H01L 23/36***(2006.01)i
FI: C08L101/00; C08K5/101; C08L83/04; C08L83/07; C09K5/06 J; H01L23/36 D

According to International Patent Classification (IPC) or to both national classification and IPC

**B. FIELDS SEARCHED**

Minimum documentation searched (classification system followed by classification symbols)

H01L23/36; C08K5/101; C08L83/04; C08L83/07; C08L101/00; C09K5/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/002890 A1 (KANEKA CORP.) 05 January 2017 (2017-01-05) | 1-21 |
| A | JP 2018-65977 A (SEKISUI POLYMATECH CO., LTD.) 26 April 2018 (2018-04-26) | 1-21 |
| A | WO 2021/095507 A1 (SHIN-ETSU CHEMICAL CO., LTD.) 20 May 2021 (2021-05-20) | 1-21 |
| A | WO 2020/095902 A1 (SEKISUI POLYMATECH CO., LTD.) 14 May 2020 (2020-05-14) | 1-21 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/041195**

| Patent document cited in search report | Publication date (day/month/year) | Patent family member(s) | Publication date (day/month/year) |
|---|---|---|---|
| WO 2017/002890 A1 | 05 January 2017 | US 2018/0171113 A1 | |
| | | EP 3318600 A1 | |
| | | CN 107735439 A | |
| JP 2018-65977 A | 26 April 2018 | (Family: none) | |
| WO 2021/095507 A1 | 20 May 2021 | CN 114729193 A | |
| | | KR 10-2022-0101651 A | |
| | | TW 202118854 A | |
| WO 2020/095902 A1 | 14 May 2020 | US 2021/0371660 A1 | |
| | | EP 3878911 A1 | |
| | | CN 112955506 A | |
| | | KR 10-2021-0088568 A | |
| | | TW 202024257 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018173860 A
- JP 2012007057 A